# EUROPEAN PATENT APPLICATION

(11) **EP 4 848 879 A1**
(43) Date of publication of application: **02.12.2026**
(21) Application number: 24923510.2
(22) Date of filing: 10.12.2024
(51) Int. Cl.: H04W 76/15

(54) **COMMUNICATION METHOD AND COMMUNICATION APPARATUS**

(30) Priority: 06.02.2024 CN 202410171483
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); XU, Shengfeng, Shenzhen, Guangdong 518129 (CN); SUN, Haiyang, Shenzhen, Guangdong 518129 (CN)
(74) Representative: Huawei European IPR
(86) International application number: PCT/CN2024/138094
(87) International publication number: WO 2025/167308

(57) **Abstract**

This application provides a communication method, applied to a multi steer device, where the multi steer device includes a plurality of pieces of subscription data, the multi steer device performs the method by using first subscription data, the first subscription data is one of the plurality of pieces of subscription data, and the method includes: sending a first session establishment request, where the first session establishment request includes first indication information and a session identifier of a multi steer session, and the first indication information indicates to establish the multi steer session; and receiving a first session establishment accept message, where the first session establishment accept message includes session association information and a first IP address, the session association information is used to associate session transmission paths of the plurality of pieces of subscription data, the first IP address includes an IP address allocated by an SMF to a first session, and the first session is a sub-session that is of the multi steer session and established by using the first subscription data. In technical solutions of this application, sessions of the multi steer device may be associated.

## Description

This application claims priority to Chinese Patent Application No. 202410171483.5, filed with the China National Intellectual Property Administration on February 6, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and apparatus.

### BACKGROUND

An access traffic steering, switching, and splitting (access traffic steering, switching, and splitting, ATSSS) feature is defined in existing standards: A user equipment (user equipment, UE) may access a core network through both a 3rd generation partnership project (3rd generation partnership project, 3GPP) connection and a non-3GPP connection, to obtain services. When the UE is not in the coverage of a home public land mobile network (home public land mobile network, HPLMN), the UE may access a visited public land mobile network (visited public land mobile network, VPLMN) via 3GPP, and access the HPLMN via non-3GPP. After the UE accesses the network by using two different access types, the UE may establish a multi-access protocol data unit (multi-access protocol data unit, MA PDU) session to obtain the services.

A concept of a dual steer device is introduced in discussions of the R19 standard. One dual steer device may be a terminal device including two pieces of subscription data; or one dual steer device may include two independent user equipments (user equipments, UEs), where a corresponding association relationship between subscription data of the two UEs is stored in the network. For example, the device may be a UE that has two subscriber identity module (subscriber identity module, SIM) cards and can implement dual-SIM dual-active, or may be two completely independent UEs that are encapsulated in the same device or connected together in some other manners.

In the conventional technology, because the UE establishes the session by using the two different access types of the same UE, a session management function (session management function, SMF) network element may naturally know that the same UE performs session establishment. The two different access types may be associated by using the MA PDU session, and use a same IP, so that it can be ensured that the IP remains unchanged during traffic switching. However, when the dual steer device establishes sessions, the sessions of the two UEs each have an independent IP. During traffic switching, for example, switching from a session of a UE 1 to a session of a UE 2, due to a change of an IP, it is equivalent to session re-establishment. As a result, the session is temporarily interrupted, affecting user experience.

### SUMMARY

This application provides a communication method and a communication apparatus, to associate sessions established by a dual steer device by using different subscription data.

According to a first aspect, a communication method is provided, applied to a multi steer device, where the multi steer device includes a plurality of pieces of subscription data, the multi steer device performs the method by using first subscription data, the first subscription data is one of the plurality of pieces of subscription data, and the method includes: sending a first session establishment request, where the first session establishment request includes first indication information and a session identifier of a multi steer session, and the first indication information indicates to establish the multi steer session; and receiving a first session establishment accept message, where the first session establishment accept message includes session association information and a first internet protocol (internet protocol, IP) address, the session association information is used to associate session transmission paths of the plurality of pieces of subscription data, the first IP address includes an IP address allocated by a session management function (session management function, SMF) network element to a first session, and the first session is a sub-session that is of the multi steer session and established by using the first subscription data.

In the technical solutions provided in this application, sub-sessions established by the multi steer device by using different subscription data may be associated by using the session association information, and different IP addresses are allocated to all the sub-sessions, to jointly complete session transmission.

There is an association relationship between the plurality of pieces of subscription data included in the multi steer device.

In some possible implementations, the multi steer device may be a dual steer device (dual steer device). The multi steer device includes the first subscription data and second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a subscription permanent identifier (subscriber permanent identifier, SUPI) or a universal subscriber identity module (universal subscriber identity module, USIM). In some possible application scenarios, the subscription data may also be directly referred to as a user equipment or a terminal device. This name is not limited in this application.

In some possible implementations, the session identifier of the multi steer session may be an identifier (identifier, ID) allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-globally unique temporary identifier (5G-globally unique temporary identifier, 5G-GUTI), a 5G-temporary mobile subscription identifier (5G-temporary mobile subscription identifier, 5G-S-TMSI), or a SUPI. A specific format of the session identifier of the dual steer session should not be understood as a limitation on this application.

Optionally, the session identifier of the dual steer session may alternatively be included in the first indication information.

The first indication information indicates to establish the multi steer session, and the multi steer session is a session established by the multi steer device. The multi steer session includes a session established by using at least one of the plurality of pieces of subscription data, and the session established by using the subscription data is referred to as a sub-session of the multi steer session.

The first session is the sub-session that is of the multi steer session and established by the multi steer device by using the first subscription data. The multi steer device may further establish another sub-session of the multi steer session by using other subscription data. These sub-sessions jointly form the multi steer session.

In some possible implementations, the session association information may alternatively include the first IP address. In other words, the first session establishment accept message includes the session association information, and the session association information includes the first IP address.

With reference to the first aspect, in some implementations of the first aspect, the session association information includes a session common IP address and/or a connection ID, the session common IP address is a common IP address used for establishing a multipath transmission connection by using the plurality of pieces of subscription data, and the connection ID identifies the multipath transmission connection.

For example, the multipath transmission connection may be a connection established by using multipath transmission control protocol (multipath transmission control protocol, MPTCP) functionality or multipath quick user datagram protocol internet connections (multipath quick user datagram protocol internet connections, MPQUIC) functionality.

When the multipath transmission connection is an MPTCP connection, the session association information may be the session common IP address. When the multipath transmission connection is an MPQUIC connection, the session association information may be the session common IP address and/or the connection ID.

After the session of the multi steer device is established, the multi steer device may perform data transmission with an application server by using the session association information and the allocated IP address, where the first IP address may be used in the first session for data transmission.

In the technical solutions provided in this application, the sub-sessions established by the multi steer device by using the different subscription data may be associated by using the session association information, to jointly complete session transmission.

According to a second aspect, a communication method is provided, applied to a multi steer device, where the multi steer device includes a plurality of pieces of subscription data, the multi steer device performs the method by using second subscription data, the second subscription data is one of the plurality of pieces of subscription data, and the method includes: sending a second session establishment request, where the second session establishment request includes second indication information and a session identifier of a multi steer session, and the second indication information indicates to establish the multi steer session; and receiving a second session establishment accept message, where the second session establishment accept message includes a second IP address, the second IP address includes an IP address allocated by an SMF to a second session, and the second session is a sub-session that is of the multi steer session and established by using the second subscription data.

In the technical solutions provided in this application, sub-sessions established by the multi steer device by using different subscription data may be associated by using session association information, and different IP addresses are allocated to all the sub-sessions, to jointly complete session transmission.

In some possible implementations, the multi steer device may be a dual steer device. The multi steer device includes first subscription data and the second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a SUPI or a USIM. In some possible application scenarios, the subscription data may also be directly referred to as a user equipment or a terminal device. This name is not limited in this application.

The UE 1 may send the session association information and the session identifier of the multi steer session to the UE 2. In some possible implementations, because there is an association relationship between the plurality of pieces of subscription data of the multi steer device, the UE 2 may alternatively directly obtain the session association information and the session identifier of the multi steer session of the UE 1.

In some possible implementations, the session identifier of the multi steer session may be an ID allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-GUTI, a 5G-S-TMSI, or a SUPI. A specific format of the session identifier of the dual steer session should not be understood as a limitation on this application.

Optionally, the session identifier of the dual steer session may alternatively be included in the second indication information. The second indication information may be the same as first indication information.

The second indication information indicates to establish the multi steer session, and the multi steer session is a session established by the multi steer device. The multi steer session includes a session established by using at least one of the plurality of pieces of subscription data, and the session established by using the subscription data is referred to as a sub-session of the multi steer session.

The second session is the sub-session that is of the multi steer session and established by the multi steer device by using the second subscription data. The multi steer device may further establish another sub-session of the multi steer session by using other subscription data. These sub-sessions jointly form the multi steer session.

With reference to the second aspect, in some implementations of the second aspect, the session association information includes a session common IP address and/or a connection ID, the session common IP address is a common IP address used for establishing a multipath transmission connection by using the plurality of pieces of subscription data, and the connection ID identifies the multipath transmission connection.

For example, the multipath transmission connection may be a connection established by using MPTCP functionality or MPQUIC functionality.

When the multipath transmission connection is an MPTCP connection, the session association information may be the session common IP address. When the multipath transmission connection is an MPQUIC connection, the session association information may be the session common IP address and/or the connection ID.

After the session of the multi steer device is established, the multi steer device may perform data transmission with an application server by using the session association information and the allocated IP address, where the second IP address may be used in the second session for data transmission.

In the technical solutions provided in this application, the sub-sessions established by the multi steer device by using the different subscription data may be associated by using the session association information, to jointly complete session transmission.

According to a third aspect, a communication method is provided, applied to an SMF, where the method includes: receiving a first session establishment request sent by a multi steer device by using first subscription data, where the first session establishment request includes first indication information and a session identifier of a multi steer session, the first indication information indicates to establish the multi steer session, the multi steer device includes a plurality of pieces of subscription data, and the plurality of pieces of subscription data include the first subscription data; and sending a first session establishment accept message, where the first session establishment accept message includes session association information and a first IP address, the session association information is used to associate session transmission paths of the plurality of pieces of subscription data, the first IP address includes an IP address allocated by the SMF to a first session, and the first session is a sub-session that is of the multi steer session and established by using the first subscription data.

In the technical solutions provided in this application, sub-sessions established by the multi steer device by using different subscription data may be associated by using the session association information, and different IP addresses are allocated to all the sub-sessions by the SMF, to jointly complete session transmission.

There is an association relationship between the plurality of pieces of subscription data included in the multi steer device.

In some possible implementations, the multi steer device may be a dual steer device. The multi steer device includes the first subscription data and second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a SUPI or a USIM. In some possible application scenarios, the subscription data may also be directly referred to as a user equipment or a terminal device. This name is not limited in this application.

In some possible implementations, the session identifier of the multi steer session may be an ID allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-GUTI, a 5G-S-TMSI, or a SUPI. A specific format of the session identifier of the dual steer session should not be understood as a limitation on this application.

Optionally, the session identifier of the dual steer session may alternatively be included in the first indication information.

After receiving the first session establishment request, the SMF determines that a type of the session established by the UE 1 is a multi steer session, and checks, based on the session identifier, whether the session association information and/or the first IP address of the multi steer session exist/exists in a context. If the session association information and/or the first IP address do/does not exist, it indicates that the session is a new multi steer session, and the SMF allocates the session association information and the first IP address to the first session.

In some possible implementations, the session association information may alternatively include the first IP address. In other words, the first session establishment accept message includes the session association information, and the session association information includes the first IP address.

With reference to the third aspect, in some implementations of the third aspect, the session association information includes a session common IP address and/or a connection ID, the session common IP address is a common IP address used for establishing a multipath transmission connection by using the plurality of pieces of subscription data, and the connection ID identifies the multipath transmission connection.

For example, the multipath transmission connection may be a connection established by using MPTCP functionality or MPQUIC functionality.

When the multipath transmission connection is an MPTCP connection, the session association information may be the session common IP address. When the multipath transmission connection is an MPQUIC connection, the session association information may be the session common IP address and/or the connection ID.

In the technical solutions provided in this application, the sub-sessions established by the multi steer device by using the different subscription data may be associated by using the session association information, to jointly complete session transmission.

With reference to the third aspect, in some implementations of the third aspect, before sending the first session establishment accept message, the method further includes: sending a third session establishment request to a UPF, where the third session establishment request is used to establish a session with the UPF; the third session establishment request includes the session association information and the first IP address, or the third session establishment request includes the session identifier and the first IP address; and the UPF is configured to aggregate the sub-sessions of the multi steer session.

In some possible implementations, the third session establishment request includes the first IP address, and further includes the session association information and/or the session identifier. The UPF may return response information to the SMF, where the response information indicates that an N4 session between the SMF and the UPF is created. The response information includes a CN resource that is used by an access network to send uplink data to the UPF.

In the technical solutions provided in this application, the SMF may select the same UPF to establish sessions for a plurality of associated UEs, and the UPF aggregates the sub-sessions to communicate with an application server, to complete session transmission.

With reference to the third aspect, in some implementations of the third aspect, the method further includes: receiving a second session establishment request sent by the multi steer device by using the second subscription data, where the second session establishment request includes second indication information and the session identifier, the second indication information indicates to establish the multi steer session, and the plurality of pieces of subscription data include the second subscription data; and sending a second session establishment accept message, where the second session establishment accept message includes a second IP address, the second IP address includes an IP address allocated by the SMF to a second session, and the second session is a sub-session that is of the multi steer session and established by using the second subscription data.

Optionally, the session identifier of the dual steer session may alternatively be included in the second indication information. The second indication information may be the same as the first indication information.

When determining that a type of the session established by the UE 2 is a dual steer session, the SMF checks whether the session association information and/or the first IP address exist/exists in a context corresponding to the session identifier. If the session association information and/or the first IP address exist/exists, it indicates that a session sub-path needs to be added for an existing dual steer session, and the SMF allocates the second IP address to the second session.

The second session is the sub-session that is of the multi steer session and established by the multi steer device by using the second subscription data, and the first session and the second session may jointly form the multi steer session.

In the technical solutions provided in this application, the sub-sessions established by the multi steer device by using the different subscription data may be associated by using the session association information, and different IP addresses are allocated to all the sub-sessions, to jointly complete session transmission.

With reference to the third aspect, in some implementations of the third aspect, before sending the second session establishment accept message, the method further includes: sending a fourth session establishment request to the UPF, where the fourth session establishment request is used to establish a session with the UPF; and the fourth session establishment request includes the session association information and the second IP address, or the fourth session establishment request includes the session identifier and the second IP address.

The SMF receives the session identifier sent by the UE 2, determines, based on context information corresponding to the identifier, the UPF connected to the UE 1, and sends the fourth session establishment request to the UPF.

In some possible implementations, the fourth session establishment request includes the second IP address, and further includes the session association information and/or the session identifier. The UPF may aggregate the first session and the second session together by using the session association information and/or the session identifier.

The UPF may return response information to the SMF, where the response information indicates that an N4 session between the SMF and the UPF is created. The response information includes information about an CN resource that is used by the access network to send uplink data to the UPF.

In the technical solutions provided in this application, the sub-sessions established by the multi steer device by using the different subscription data may be aggregated by using the UPF. After aggregating the sub-sessions, the UPF communicates with the application server to complete session transmission.

With reference to the third aspect, in some implementations of the third aspect, the method further includes: sending a session registration message, where the session registration message is used to register context information of the multi steer session with a unified data management (unified data management, UDM) network element, and the context information includes a type of the multi steer session and the session identifier.

The SMF registers the context information of the multi steer session with the UDM, where the context information includes the type of the multi steer session and the session identifier, and may further include an ID of a UE.

Association information of the plurality of pieces of subscription data of the multi steer device is configured in the UDM. The UDM may determine, based on the association information, other subscription data associated with specific subscription data, determine a corresponding access and mobility management function (access and mobility management function, AMF) network element based on a context of the other subscription data, and update session information to the AMF network element. Subsequently, when the multi steer device establishes a multi steer session by using the other subscription data, the AMF may select the same SMF to establish the multi steer session.

According to a fourth aspect, a communication method is provided, applied to a multi steer device, where the multi steer device includes a plurality of pieces of subscription data, the multi steer device performs the method by using first subscription data, the first subscription data is one of the plurality of pieces of subscription data, and the method includes: sending a first session establishment request, where the first session establishment request includes first indication information, the first indication information indicates to allocate a proxy to the multi steer device, and the proxy is used to establish a multipath connection with the multi steer device; receiving a first session establishment accept message, where the first session establishment accept message includes information about the proxy, the first session establishment accept message indicates that a first session is established, and the first session is a session established by the multi steer device by using the first subscription data; sending a connection establishment request to the proxy based on the information about the proxy; and receiving a connection establishment accept message sent by the proxy, where the connection establishment accept message includes session association information, and the session association information is used to associate session transmission paths of the plurality of pieces of subscription data.

In the technical solutions provided in this application, a conventional session establishment procedure is performed for a session establishment request sent by a UE, but a proxy is selected for the UE, to aggregate sessions of a plurality of UEs, and establish the multipath transmission connection based on the sessions.

There is an association relationship between the plurality of pieces of subscription data included in the multi steer device.

In some possible implementations, the multi steer device may be a dual steer device. The multi steer device includes the first subscription data and second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a SUPI or a USIM. In some possible application scenarios, the subscription data may also be directly referred to as a user equipment or a terminal device. This name is not limited in this application.

The first session is a PDU session established by the multi steer device by using the first subscription data. The multi steer device may further establish another PDU session by using other subscription data. These PDU sessions are aggregated by using the proxy, and share one multipath transmission connection.

With reference to the fourth aspect, in some implementations of the fourth aspect, the session association information includes a session common IP address and/or a connection ID, the session common IP address is a common IP address used for establishing the multipath transmission connection by using the plurality of pieces of subscription data, and the connection ID identifies the multipath transmission connection.

For example, the multipath transmission connection may be a connection established by using MPTCP functionality or MPQUIC functionality.

When the multipath transmission connection is an MPTCP connection, the session association information may be the session common IP address. When the multipath transmission connection is an MPQUIC connection, the session association information may be the session common IP address and/or the connection ID.

It should be understood that the information about the proxy may be an IP address of the proxy, and may further include an ID of the proxy, a type of the proxy, and the like.

In the technical solutions provided in this application, the conventional session establishment procedure is performed for the session establishment request sent by the UE, but the proxy is selected for the UE, to aggregate the sessions of the plurality of UEs, and establish the multipath transmission connection based on the sessions.

With reference to the fourth aspect, in some implementations of the fourth aspect, the first session establishment request further includes a session identifier of the first session.

In some possible implementations, a session identifier of the multi steer session may be an ID allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-GUTI, a 5G-S-TMSI, or a SUPI. A specific format of the session identifier should not be understood as a limitation on this application. The SMF receives the first session establishment request, and checks whether a context corresponding to the session identifier exists or whether the information about the proxy exists in the context. If the context or the information does not exist, it indicates that the session is a new session, and the SMF selects a proxy that can be used as an anchor and a UPF that can be connected to the anchor.

In the technical solutions provided in this application, the first session establishment request sent by the UE 1 to the SMF may further include the session identifier of the first session. Subsequently, another UE associated with the UE 1 may send the session identifier of the first session to the SMF. The SMF may determine, based on the context corresponding to the session identifier, that sessions are the same session. Therefore, the SMF may allocate, to the another UE, the same proxy and the same UPF that can be connected to the proxy.

According to a fifth aspect, a communication method is provided, applied to a multi steer device, where the multi steer device includes a plurality of pieces of subscription data, the multi steer device performs the method by using second subscription data, the second subscription data is one of the plurality of pieces of subscription data, and the method includes: sending a second session establishment request, where the second session establishment request includes second indication information and information about a proxy, the second indication information indicates to allocate the proxy to the multi steer device, and the proxy is used to establish a multipath connection with the multi steer device; receiving a second session establishment accept message, where the second session establishment accept message indicates that a second session is established, and the second session is a session established by the multi steer device by using the second subscription data; and sending a connection join request to the proxy based on the information about the proxy, where the connection join request includes session association information, the connection join request is used to request to join a connection corresponding to the session association information, and the session association information is used to associate session transmission paths of the plurality of pieces of subscription data.

In the technical solutions provided in this application, a conventional session establishment procedure is performed for a session establishment request sent by a UE, but a proxy is selected for the UE, to aggregate sessions of a plurality of UEs, and establish the multipath transmission connection based on the sessions.

There is an association relationship between the plurality of pieces of subscription data included in the multi steer device.

In some possible implementations, the multi steer device may be a dual steer device. The multi steer device includes first subscription data and the second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a SUPI or a USIM. In some possible application scenarios, the subscription data may also be directly referred to as a user equipment or a terminal device. This name is not limited in this application.

It should be understood that the information about the proxy may be an IP address of the proxy, and may further include an ID of the proxy, a type of the proxy, and the like.

Optionally, the information about the proxy may be included in the second indication information, and the second indication information may be the same as first indication information.

The UE 1 may send the session association information and the information about the proxy to the UE 2. In some possible implementations, because there is the association relationship between the plurality of pieces of subscription data of the multi steer device, the UE 2 may alternatively directly obtain the session association information and the information about the proxy of the UE 1.

The UE 2 sends the connection join request to the proxy, and after joining the connection corresponding to the session association information, a first session and the second session share one multipath transmission connection.

With reference to the fifth aspect, in some implementations of the fifth aspect, the session association information includes a session common IP address and/or a connection ID, the session common IP address is a common IP address used for establishing the multipath transmission connection by using the plurality of pieces of subscription data, and the connection ID identifies the multipath transmission connection.

For example, the multipath transmission connection may be a connection established by using MPTCP functionality or MPQUIC functionality.

When the multipath transmission connection is an MPTCP connection, the session association information may be the session common IP address. When the multipath transmission connection is an MPQUIC connection, the session association information may be the session common IP address and/or the connection ID.

The connection join request sent by the UE 2 includes the session association information, so that the proxy may know a specific connection the UE 2 is to be associated with. Subsequently, the UE 2 and the UE 1 may send data by using the same common IP address.

In the technical solutions provided in this application, the conventional session establishment procedure is performed for the session establishment request sent by the UE, but the proxy is selected for the UE, to aggregate the sessions of the plurality of UEs, and establish the multipath transmission connection based on the sessions.

With reference to the fifth aspect, in some implementations of the fifth aspect, the method further includes: receiving response information from the proxy, where the response information indicates that joining the connection corresponding to the session association information succeeds.

With reference to the fifth aspect, in some implementations of the fifth aspect, the second session establishment request further includes a session identifier of the first session, the first session is a session established by the multi steer device by using the first subscription data, and the first subscription data is one of the plurality of pieces of subscription data other than the second subscription data.

In some possible implementations, a session identifier of a multi steer session may be an ID allocated by the UE 1 to the multi steer session, and an SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-GUTI, a 5G-S-TMSI, or a SUPI. A specific format of the session identifier should not be understood as a limitation on this application.

The UE 1 may send the session identifier of the first session to the UE 2. In some possible implementations, because there is the association relationship between the plurality of pieces of subscription data of the multi steer device, the UE 2 may alternatively directly obtain the session identifier of the first session of the UE 1.

In some possible implementations, if the UE 2 may obtain the session identifier of the first session of the UE 1, the UE 2 may send the second indication information and the session identifier to the SMF. In other words, the second session establishment request may include the second indication information and the session identifier. The SMF may allocate, to the UE 2 based on a context corresponding to the session identifier, the proxy that is the same as that of the UE 1 and a UPF that can be connected to the proxy.

In the technical solutions provided in this application, the second session establishment request sent by the UE 2 to the SMF may further include the session identifier of the first session, and the SMF may allocate, to the UE 2 based on the context corresponding to the session identifier, the proxy that is the same as that of the UE 1 and the UPF that can be connected to the proxy.

According to a sixth aspect, a communication method is provided, applied to an SMF, where the method includes: receiving a first session establishment request sent by a multi steer device by using first subscription data, where the first session establishment request includes first indication information, the first indication information indicates to allocate a proxy to the multi steer device, the proxy is used to establish a multipath connection with the multi steer device, the multi steer device includes a plurality of pieces of subscription data, and the plurality of pieces of subscription data include the first subscription data; and sending a first session establishment accept message, where the first session establishment accept message includes information about the proxy, the first session establishment accept message indicates that a first session is established, and the first session is a session established by the multi steer device by using the first subscription data.

In the technical solutions provided in this application, the SMF performs a conventional session establishment procedure for a session establishment request sent by a UE, but selects a proxy for the UE, to aggregate sessions of a plurality of UEs, and establish the multipath transmission connection based on the sessions.

There is an association relationship between the plurality of pieces of subscription data included in the multi steer device.

In some possible implementations, the multi steer device may be a dual steer device. The multi steer device includes the first subscription data and second subscription data. A UE 1 performs communication by using the first subscription data, and a UE 2 performs communication by using the second subscription data. Optionally, the multi steer device may further include third subscription data, fourth subscription data, and the like. A UE 3 performs communication by using the third subscription data, and a UE 4 performs communication by using the fourth subscription data. A quantity of pieces of subscription data included in the multi steer device is not limited in this application.

In this application, when the multi steer device performs communication by using the first subscription data, the multi steer device may be referred to as the UE 1. When the multi steer device performs communication by using the second subscription data, the multi steer device may be referred to as the UE 2. The rest can be deduced by analogy.

For example, the subscription data may be a SUPI or a USIM. In some possible application scenarios, the subscription data may also be directly referred to as a user equipment or a terminal device. This name is not limited in this application.

After receiving the first session establishment request, the SMF selects, for the UE 1, a proxy that can be used as a session anchor and a UPF that can be connected to the anchor.

It should be understood that the information about the proxy may be an IP address of the proxy, and may further include an ID of the proxy, a type of the proxy, and the like.

The first session is a PDU session established by the multi steer device by using the first subscription data. The multi steer device may further establish another PDU session by using other subscription data. These PDU sessions are aggregated by using the proxy, and share one multipath transmission connection.

With reference to the sixth aspect, in some implementations of the sixth aspect, the first session establishment request further includes a session identifier of the first session.

In some possible implementations, the session identifier of the multi steer session may be an ID allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-GUTI, a 5G-S-TMSI, or a SUPI. A specific format of the session identifier should not be understood as a limitation on this application.

The SMF receives the first session establishment request, and may check whether a context corresponding to the session identifier exists or whether the information about the proxy exists in the context. If the context or the information does not exist, it indicates that the session is a new session, and the SMF selects a proxy that can be used as a session anchor and a UPF that can be connected to the anchor.

In the technical solutions provided in this application, the first session establishment request sent by the UE 1 to the SMF may further include the session identifier of the first session. Subsequently, another UE associated with the UE 1 may send the session identifier of the first session to the SMF. The SMF may allocate, to the another UE based on the context corresponding to the session identifier, the same proxy and the same UPF that can be connected to the proxy.

With reference to the sixth aspect, in some implementations of the sixth aspect, the method further includes: receiving a second session establishment request sent by the multi steer device by using the second subscription data, where the second session establishment request includes second indication information and the information about the proxy, the second indication information indicates to allocate the proxy to the multi steer device, and the second subscription data is one of the plurality of pieces of subscription data other than the first subscription data; and sending a second session establishment accept message, where the second session establishment accept message indicates that a second session is established, and the second session is a session established by the multi steer device by using the second subscription data.

Optionally, the information about the proxy may be included in the second indication information, and the second indication information may be the same as the first indication information.

The SMF may select, for the UE 2 based on the information about the proxy, a UPF that can be connected to the proxy.

The UE 1 may send the session association information and the information about the proxy to the UE 2. In some possible implementations, because there is the association relationship between the plurality of pieces of subscription data of the multi steer device, the UE 2 may alternatively directly obtain the session association information and the session identifier of the multi steer session of the UE 1.

In some possible implementations, if the UE 2 may obtain the session identifier of the first session of the UE 1, the UE 2 may send the second indication information and the session identifier to the SMF. In other words, the second session establishment request may include the second indication information and the session identifier. The SMF may allocate, to the UE 2 based on the context corresponding to the session identifier, the proxy that is the same as that of the UE 1 and the UPF that can be connected to the proxy.

In the technical solutions provided in this application, the SMF processes session establishment requests sent by the plurality of UEs as requests of separate PDU sessions, but selects the same proxy for the plurality of UEs to aggregate the sessions of the plurality of UEs.

With reference to the sixth aspect, in some implementations of the sixth aspect, the method further includes: sending a proxy request message, where the proxy request message is used to request a first network element to allocate the proxy to the multi steer device, and the first network element is configured to manage the session of the multi steer device; and receiving a proxy allocation message, where the proxy allocation message includes the information about the proxy.

In some possible implementations, during selection of the proxy that can be used as the session anchor, a network element other than the SMF may perform the selection. For example, the network element is the first network element, and the first network element may manage the sessions as a whole, to ensure that the plurality of UEs select the same proxy. For example, the network element is a dual steer SMF (DualSteer SMF, DS-SMF). When receiving a request for allocating the proxy, the SMF sends the proxy request message to the DS-SMF, and then selects, based on the obtained information about the proxy, the UPF that can be connected to the proxy.

In the technical solutions provided in this application, for the session establishment requests sent by the plurality of UEs, the SMF may select the same proxy for the plurality of UEs by using the another network element, to aggregate the sessions of the plurality of UEs.

According to a seventh aspect, a communication apparatus is provided, including a module or a unit configured to perform the method according to any one of the first aspect or the possible implementations of the first aspect, including a module or a unit configured to perform the method according to any one of the second aspect or the possible implementations of the second aspect, including a module or a unit configured to perform the method according to any one of the fourth aspect or the possible implementations of the fourth aspect, or including a module or a unit configured to perform the method according to any one of the fifth aspect or the possible implementations of the fifth aspect.

According to an eighth aspect, a communication apparatus is provided, including a processor. The processor is coupled to a memory, and may be configured to execute instructions in the memory, to implement the method according to any one of the first aspect or the possible implementations of the first aspect, implement the method according to any one of the second aspect or the possible implementations of the second aspect, implement the method according to any one of the fourth aspect or the possible implementations of the fourth aspect, or implement the method according to any one of the fifth aspect or the possible implementations of the fifth aspect. Optionally, the communication apparatus further includes the memory. Optionally, the communication apparatus further includes a communication interface. The processor is coupled to the communication interface, and controls the communication interface to communicate with another device.

In an implementation, the communication apparatus is a multi steer device. When the communication apparatus is the multi steer device, the communication interface may be a transceiver or an input/output interface.

In another implementation, the communication apparatus is a chip disposed in a multi steer device. When the communication apparatus is the chip disposed in the multi steer device, the communication interface may be an input/output interface.

Optionally, the transceiver may alternatively be a transceiver circuit. Optionally, the input/output interface may be an input/output circuit.

According to a ninth aspect, a communication apparatus is provided, including a module or a unit configured to perform the method according to any one of the third aspect or the possible implementations of the third aspect, or including a module or a unit configured to perform the method according to any one of the sixth aspect or the possible implementations of the sixth aspect.

According to a tenth aspect, a communication apparatus is provided, including a processor. The processor is coupled to a memory, and may be configured to execute instructions in the memory, to implement the method according to any one of the third aspect or the possible implementations of the third aspect, or implement the method according to any one of the sixth aspect or the possible implementations of the sixth aspect. Optionally, the communication apparatus further includes the memory. Optionally, the communication apparatus further includes a communication interface. The processor is coupled to the communication interface, and controls the communication interface to communicate with another device.

In an implementation, the communication apparatus is an SMF network element. When the communication apparatus is the SMF network element, the communication interface may be a transceiver or an input/output interface.

In another implementation, the communication apparatus is a chip disposed in an SMF network element. When the communication apparatus is the chip disposed in the SMF network element, the communication interface may be an input/output interface.

Optionally, the transceiver may alternatively be a transceiver circuit. Optionally, the input/output interface may be an input/output circuit.

According to an eleventh aspect, a communication system is provided, including a multi steer device and an SMF network element, where the multi steer device performs the method according to any one of the first aspect and the second aspect and the possible implementations of the first aspect and the second aspect, and the SMF network element performs the method according to any one of the third aspect and the possible implementations of the third aspect.

According to a twelfth aspect, a communication system is provided, including a multi steer device and an SMF network element, where the multi steer device performs the method according to any one of the fourth aspect and the fifth aspect and the possible implementations of the fourth aspect and the fifth aspect, and the SMF network element performs the method according to any one of the sixth aspect and the possible implementations of the sixth aspect.

According to a thirteenth aspect, a processor is provided, including an input circuit, an output circuit, and a processing circuit. The processing circuit is configured to: receive a signal through the input circuit, and transmit a signal through the output circuit, to cause the processor to perform the method according to any one of the first aspect to the sixth aspect and the possible implementations of the first aspect to the sixth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a fourteenth aspect, a processing apparatus is provided, including a processor and a memory. The processor is configured to read instructions stored in the memory, and may receive a signal via a receiver, and transmit a signal via a transmitter, to perform the method according to any one of the first aspect to the sixth aspect and the possible implementations of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process, for example, sending of indication information, may be a process of outputting the indication information from the processor, and receiving of capability information, may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the fourteenth aspect may be a chip. The processor may be implemented by hardware or software. When the hardware is used for implementation, the processor may be a logic circuit, an integrated circuit, or the like. When the software is used for implementation, the processor may be a general-purpose processor, and is implemented by reading software code stored in a memory. The memory may be integrated in the processor, or may be located outside the processor and exist independently.

According to a fifteenth aspect, a computer-readable storage medium is provided, where the computer-readable storage medium stores a computer program or instructions, and the computer program or the instructions are used to implement the method according to any one of the first aspect to the sixth aspect and the possible implementations of the first aspect to the sixth aspect.

According to a sixteenth aspect, a computer program product is provided. When the computer program product is run on a computer, the computer is caused to perform the method according to any one of the first aspect to the sixth aspect and the possible implementations of the first aspect to the sixth aspect.

### BRIEF DESCRIPTION OF DRAWINGS

FIG. 1 is a diagram of a dual steer device according to an embodiment of this application;
FIG. 2 is a diagram of an architecture of ATSSS;
FIG. 3 is a diagram of an architecture of ATSSS;
FIG. 4 is a diagram of an application scenario of a multi-access session;
FIG. 5 is an example flowchart of a communication method according to an embodiment of this application;
FIG. 6 is an example flowchart of another communication method according to an embodiment of this application;
FIG. 7 is a diagram of an application scenario in which two UEs select a same UPF to establish sessions according to an embodiment of this application;
FIG. 8 is a diagram of an application scenario in which two UEs select different UPFs to establish sessions according to an embodiment of this application;
FIG. 9 is an example flowchart of a related operation of a UE 1 in a communication method according to an embodiment of this application;
FIG. 10 is an example flowchart of a related operation of a UE 2 in a communication method according to an embodiment of this application;
FIG. 11 is an example flowchart of a related operation of a UE 1 in another communication method according to an embodiment of this application;
FIG. 12 is an example flowchart of a related operation of a UE 2 in another communication method according to an embodiment of this application;
FIG. 13 is an example flowchart of a related operation of a UE 1 in another communication method according to an embodiment of this application;
FIG. 14 is an example flowchart of a related operation of a UE 2 in another communication method according to an embodiment of this application;
FIG. 15 is a block diagram of a communication apparatus according to an embodiment of this application; and
FIG. 16 is a block diagram of a communication device according to an embodiment of this application.

### DESCRIPTION OF EMBODIMENTS

The following describes technical solutions in embodiments of this application with reference to accompanying drawings. It is clear that the described embodiments are some but not all of embodiments of this application. All other embodiments obtained by a person of ordinary skill in the art based on embodiments of this application without creative efforts shall fall within the protection scope of this application.

In embodiments of this application, the term "example", "for example", or the like is used to give an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The technical solutions provided in embodiments of this application may be applied to various communication systems, for example, a 4th generation (4th generation, 4G), 5th generation (5th generation, 5G), or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (Internet of Things, IoT) communication system, or another communication system.

The foregoing communication systems applicable to this application are merely examples for description, and the communication systems applicable to this application are not limited thereto. This is collectively described herein. Details are not described below again. For ease of understanding of the technical solutions of this application, the following briefly describes related concepts or related technologies in this application.
1. Terminal device: The terminal device may be referred to as a user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user proxy, or a user apparatus. The terminal device may be a device that provides voice/data connectivity for a user, for example, a handheld device or a vehicle-mounted device with a wireless connection function. Currently, some examples of the terminal may be: a mobile phone (mobile phone), a tablet computer (pad), a computer with a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN), or the like.

In addition, the terminal device may alternatively be a terminal device in an internet of things (Internet of things, IoT) system. IoT is an important part of future information technology development. A main technical feature of IoT is to connect things to a network by using a communication technology, to implement a smart network for human-machine interconnection and thing-thing interconnection. The IoT technology can achieve massive connections, deep coverage, and terminal power saving by using, for example, a narrowband (narrowband, NB) technology.

In addition, the terminal device may further include sensors such as an intelligent printer, a train detector, or a gas station, which mainly functions to collect data (a part of terminal devices), receive control information and downlink data from a network device, send an electromagnetic wave, and transmit uplink data to the network device.

It should be understood that the terminal device may be any device that can access a network. The terminal device and the access network device may communicate with each other by using a specific air interface technology.

2. Access network (access network, AN): The access network can provide a network access function for authorized users in a specific area. A terminal device may access a core network by using access networks of different access technologies, for example, access the core network by using a non-3GPP technology and a 3GPP technology. By way of example and not limitation, the access technology may include, for example, an NR access technology, an evolved universal mobile telecommunications system (Universal Mobile Telecommunications System, UMTS) terrestrial radio access network (UMTS Terrestrial Radio Access Network, E-UTRAN) access technology, a MulteFire access technology, the 3GPP access technology, the non-3GPP access technology, a 4G cellular access technology, a 5G cellular access technology, a trusted or untrusted wireless fidelity (wireless fidelity, Wi-Fi) access technology, and a fixed or wired access technology. This is not limited herein.

An access network using the non-3GPP technology may include but is not limited to: a Wi-Fi network, a WLAN, a MulteFire network, a wired network (for example, a wireless and wired convergence (wireless and wireline convergence, WWC) network), or a home base station network. Correspondingly, an access network device using the non-3GPP technology may include, for example, an access point (access point, AP), a trusted WLAN interworking function (trusted WLAN interworking function, TWIF) network element, a trusted non-3GPP gateway function (trusted non-3GPP gateway function, TNGF), a wireline access gateway function (wireline access gateway function, W-AGF), an access gateway function (access gateway function, AGF), a broadband network gateway (broadband network gateway, BNG), a fixed-mobile interworking function (fixed-mobile interworking function, FMIF), and a non-3GPP interworking function (Non-3GPP interworking function, N3IWF).

An access network using the 3GPP technology may include but is not limited to an LTE network, an NR network, a 5G network, or a subsequently evolved mobile communication network. Correspondingly, an access network device using the 3GPP technology may include, for example, a radio access network (radio access network, RAN) device, a g-NodeB, an e-NodeB, and a home-NodeB.

An access network that implements a network access function based on a wireless communication technology may be referred to as a RAN. The radio access network can be responsible for functions such as radio resource management, quality of service (quality of service, QoS) management, and data compression and encryption on an air interface side. The radio access network provides an access service for the terminal device, and further completes forwarding of a control signal and user data between the terminal and the core network.

For example, the radio access network device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a Wi-Fi system, a wireless relay node, a wireless backhaul node, a transmission point (transmission point, TP), a transmission reception point (transmission reception point, TRP), a gNB or a transmission point (TRP or TP) in a 5G (for example, NR) system, one antenna panel or a group of antenna panels (including a plurality of antenna panels) of a base station in the 5G system, a network node constituting a gNB or a transmission point, for example, a baseband unit (BBU) or a distributed unit (distributed unit, DU), or a base station in a next generation 6G communication system. A specific technology and a specific device form that are used by the radio access network device are not limited in embodiments of this application.

The access network may provide a service for a cell. The terminal device may communicate with the cell by using a transmission resource (for example, a frequency domain resource or a spectrum resource) allocated by the access network device.

3. User plane function (user plane function, UPF) network element: The UPF network element is responsible for forwarding and receiving user data in a terminal device. The UPF network element may receive the user data from a data network (data network, DN), and transmit the user data to the terminal device via an access network device. Alternatively, the UPF network element may receive the user data from the terminal device via an access network device, and forward the user data to a data network. Resource transmission and scheduling functions that are used by the UPF network element to provide services for the terminal device are managed and controlled by an SMF network element. The UPF network function includes user plane-related functions such as packet routing and transmission, packet inspection, traffic usage reporting, quality of service (quality of service, QoS) handling, lawful interception, uplink packet verification, and downlink packet buffering. In a future communication system, the user plane function network element may still be the UPF network element, or may have another name. This is not limited in this application.

4. Access and mobility management function (access and mobility management function, AMF) network element: The AMF network element is a control plane network function provided by an operator network, and is responsible for access control and mobility management for a terminal device to access the operator network, for example, including functions such as mobility status management, temporary user identity allocation, and user authentication and authorization. In a future communication system, the access management network element may still be the AMF network element, or may have another name. This is not limited in this application.

5. Session management function (session management function, SMF) network element: The SMF network element is a control plane network function provided by an operator network, is responsible for managing a protocol data unit (protocol data unit, PDU) session (including session establishment, modification, and release) of a terminal device, and is used for selection and reselection of a user plane function network element, IP address allocation of the terminal device, QoS control, and the like. The PDU session is a channel used for transmission of a PDU, and the terminal device and a DN transmit PDUs to each other by using the PDU session. The SMF network function is responsible for establishment, maintenance, deletion, and the like of the PDU session. The SMF network function includes session-related functions such as session management (for example, session establishment, modification, and release, including tunnel maintenance between the user plane function UPF and a (R)AN), selection and control of the UPF network function, service and session continuity (service and session continuity, SSC) mode selection, and roaming. In a future communication system, the session management function network element may still be the SMF network element, or may have another name. This is not limited in this application.

6. Unified data management (unified data management, UDM) function: The UDM function is a control plane function provided by an operator, and is responsible for storing information such as a subscription permanent identifier (subscriber permanent identifier, SUPI) of a subscriber in an operator network, a generic public subscription identifier (generic public subscription identifier, GPSI) of the subscriber, and a credential (credential). The SUPI is first encrypted during transmission, and an encrypted SUPI is referred to as a subscription concealed identifier (subscription concealed identifier, SUCI). The information stored in the UDM network function may be used for authentication and authorization for accessing the operator network by a terminal device. The subscriber in the operator network may be specifically a user using a service provided by the operator network, for example, a user using a SIM card of the operator. The credential of the subscriber may be a long-term key stored in a subscriber identity module card of a mobile phone, or a small file stored based on information related to encryption of the subscriber identity module card of the mobile phone and the like, and is used for authentication and/or authorization. It should be noted that the permanent identifier, the credential, a security context, authentication data, and a token are equivalent to information related to verification/authentication and authorization. In a future communication system, the unified data management function network element may still be the UDM network element, or may have another name. This is not limited in this application.

7. Data network (data network, DN): The DN is a network used to provide data services for users, and is, for example, an internet (Internet), a third-party service network, or an IP multi-media service (IP multi-media service, IMS) network.

8. Traffic switching (Traffic Switching): Traffic switching is a process of switching a session from one path to another path based on a change of a network condition or a policy during multipath transmission. When the network condition changes, for example, a specific path is congested or unstable, in traffic switching, data traffic can be switched from the affected path to another available path. In this way, session continuity and stability can be maintained, and data transmission performance and reliability are optimized.

9. Traffic steering (Traffic Steering): Traffic steering is a process of allocating data traffic to different paths or subflows according to a specific policy. Different from traffic switching, traffic steering is a process of steering data traffic to a plurality of paths during session establishment or during an on-going session. Through traffic steering, load balancing, bandwidth utilization optimization, and effective utilization of network resources can be implemented. A specific steering policy may be adjusted based on factors such as a path feature, network load, and a delay, to implement optimal data transmission performance.

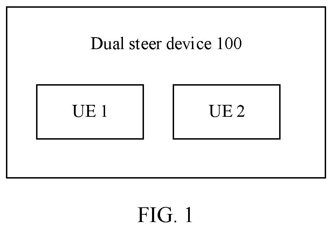

FIG. 1 is a diagram of a dual steer device according to an embodiment of this application.

A concept of the dual steer device (dual steer device) is introduced in discussions of the R19 standard. One dual steer device may be a terminal device including two pieces of subscription data; or one dual steer device may include two independent UEs, where a corresponding association relationship between subscription data of the two UEs is stored in the network, and the subscription data of the two UEs belongs to a same operator.

The dual steer device 100 includes first subscription data and second subscription data. When the dual steer device 100 performs communication by using the first subscription data, the dual steer device 100 may be referred to as a UE 1. When the dual steer device 100 performs communication by using the second subscription data, the dual steer device 100 may be referred to as a UE 2.

For example, the subscription data (the first subscription data and the second subscription data) may be a subscription permanent identifier (subscriber permanent identifier, SUPI) or a universal subscriber identity module (universal subscriber identity module, USIM). In some possible application scenarios, the subscription data may also be directly referred to as a user equipment or a terminal device. This name is not limited in this application.

The dual steer device 100 includes the UE 1 and the UE 2. A specific form of the dual steer device 100 is not limited currently. For example, the device may be a UE that has two subscriber identity module (subscriber identity module, SIM) cards and can implement dual-SIM dual-active. In other words, the two SIM cards may receive and send data simultaneously. For example, when a game is played by using one card, a voice call is made by using the other card. The dual steer device 100 may alternatively be two completely independent UEs, and the two UEs are encapsulated in the same device, or are connected together in some other manners.

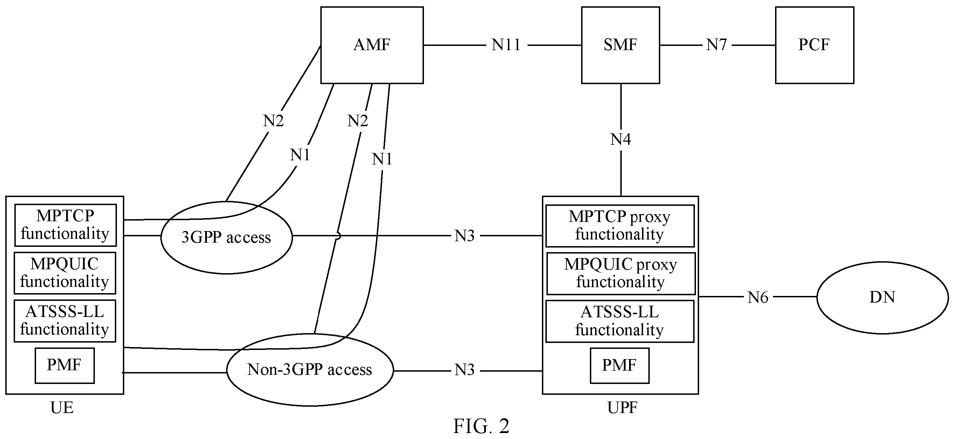

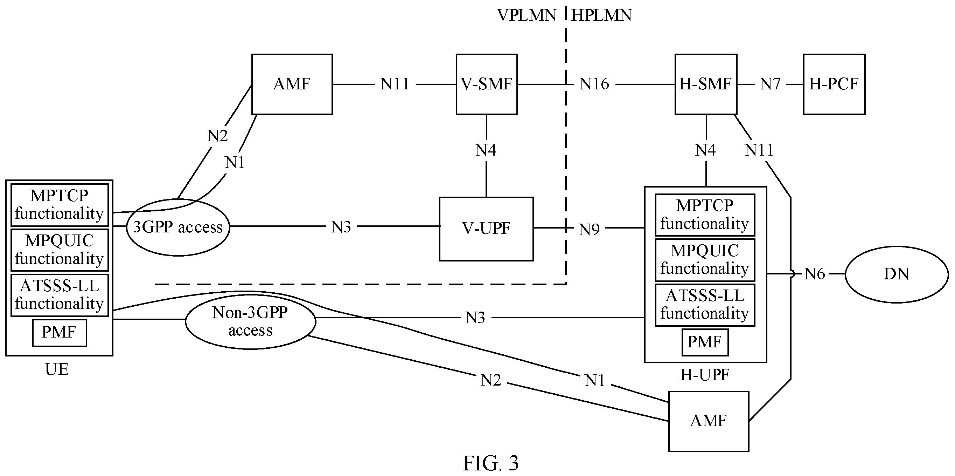

FIG. 2 and FIG. 3 are diagrams of architectures of ATSSS.

A UE and a UPF both have multipath transmission control protocol (multipath transmission control protocol, MPTCP) functionality, multipath quick user datagram protocol internet connections (multipath quick user datagram protocol internet connections, MPQUIC) functionality, ATSSS-low-layer (ATSSS-low-layer, ATSSS-LL) functionality, and a performance measurement function (performance measurement function, PMF).

Network elements in FIG. 2 and FIG. 3 may communicate with each other through interfaces shown in the figures, and some interfaces may be implemented using service-oriented interfaces. The UE and an AMF network element may interact with each other through an N1 interface, and an interaction message may be referred to as, for example, an N1 message (N1 Message). A RAN and the AMF network element may interact with each other through an N2 interface, and the N2 interface may be configured for sending a non-access stratum (non-access stratum, NAS) message and the like. The RAN and the UPF may interact with each other through an N3 interface, and the N3 interface may be configured for transmission of user plane data and the like. An SMF network element and the UPF may interact with each other through an N4 interface, and the N4 interface may be configured for transmission of information such as tunnel identification information of an N3 connection, data buffer indication information, and a downlink data notification message. The UPF and a DN may interact with each other through an N6 interface, and the N6 interface may be configured for transmission of user plane data and the like. A PCF and the SMF network element may interact with each other through an N7 interface, and the N7 interface may be configured for delivering of a protocol data unit (protocol data unit, PDU) session (session) granularity control policy, a service data flow granularity control policy, and the like. An N9 interface is an interface between UPFs, for example, an interface between a home-user plane function (home-user plane function, H-UPF) connected to the DN and a visited-user plane function (visited-user plane function, V-UPF) connected to the RAN, and is configured for transferring of user plane data between the UPFs. The SMF network element and the AMF network element may interact with each other through an N11 interface, and the N11 interface may be configured for transferring of PDU session tunnel information between the RAN and the UPF, transferring of a control message sent to the UE, transferring of radio resource control information sent to the RAN, and the like. An N16 interface is an interface between SMFs, for example, an interface between a visited-session management function (visited-session management function, V-SMF) and a home-session management function (home-session management function, H-SMF). A relationship between another interface and each network element is shown in FIG. 2 and FIG. 3. For brevity, details are not described one by one herein.

An access traffic steering, switching, and splitting (access traffic steering, switching, and splitting, ATSSS) feature is defined in existing standards: The user equipment (user equipment, UE) may access a core network through both a 3rd generation partnership project (3rd generation partnership project, 3GPP) connection and a non-3GPP connection, to obtain services. When the UE is not in the coverage of a home public land mobile network (home public land mobile network, HPLMN), the UE may access a visited public land mobile network (visited public land mobile network, VPLMN) via 3GPP, and access the HPLMN via non-3GPP. After the UE accesses the network by using two different access types, the UE may establish a multi-access protocol data unit (multi-access protocol data unit, MA PDU) session to obtain the services.

As shown in FIG. 2, when the UE accesses a same public land mobile network (public land mobile network, PLMN), because a same AMF is selected for 3GPP and non-3GPP, the UE may send a session establishment request once to simultaneously establish MA PDU sessions on both a 3GPP side and a non-3GPP side.

As shown in FIG. 3, when the UE simultaneously performs accessing over two different networks, the UE needs to initiate session establishment procedures on both sides when establishing MA PDU sessions, and uses a same PDU session ID to indicate that the sessions are the same session.

An anchor of the MA PDU sessions is located at the UPF. A network side delivers a specific rule to determine how to steer session traffic. When the UE accesses two different PLMNs, a session anchor is located at the UPF of the HPLMN. Therefore, a session of the VPLMN is of a hierarchical routing (hierarchical routing, HR) architecture.

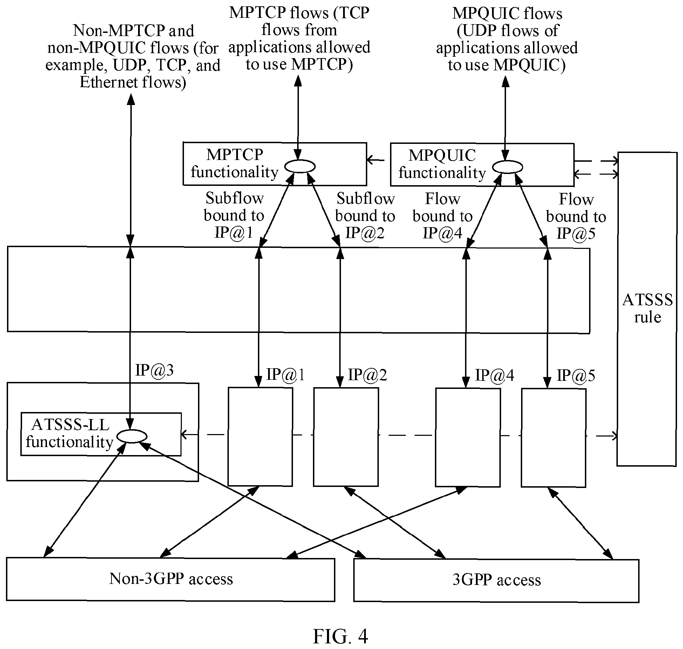

FIG. 4 is a diagram of an application scenario of a multi-access session.

A multi-access PDU (multi-access PDU, MA PDU) session allows a UE to simultaneously establish and maintain sessions over a plurality of access networks. Through the multi-access session, the user equipment may dynamically select an access network and switch between access networks based on different network conditions and requirements, to achieve optimal network connectivity and performance.

In ATSSS, when the UE uses MPTCP functionality to establish the MA PDU session, the MPTCP functionality of the UE may communicate with MPTCP proxy functionality in a UPF over a user plane of 3GPP or non-3GPP access. The MPTCP functionality can be enabled when the UE provides an "MPTCP capability" during PDU session establishment. If the UE supports the MPTCP functionality and the network agrees to enable the MPTCP functionality for the MA PDU session, the network allocates to the UE one IP address/prefix for the MA PDU session and two additional IP addresses/prefixes, called "MPTCP link-specific multipath" addresses/prefixes, one associated with 3GPP and another associated with non-3GPP access. For example, an IP address/prefix allocated by the network to the UE for associating with 3GPP may be IP@2, and an IP address/prefix for associating with non-3GPP may be IP@1. The network may send information about an MPTCP proxy to the UE, including an IP address, a port number, and a type of the MPTCP proxy.

Similarly, when the UE uses MPQUIC functionality to establish the MA PDU session, the MPQUIC functionality of the UE may communicate with MPQUIC proxy functionality in the UPF over the user plane of 3GPP or non-3GPP access. The MPQUIC functionality can be enabled when the UE provides an "MPQUIC capability" during PDU session establishment. If the UE supports the MPQUIC functionality and the network agrees to enable the MPQUIC functionality for the MA PDU session, the network allocates to the UE one IP address/prefix for the MA PDU session and two additional IP addresses/prefixes, called "MPQUIC link-specific multipath" addresses/prefixes, one associated with 3GPP and another associated with non-3GPP access. For example, an IP address/prefix allocated by the network to the UE for associating with 3GPP may be IP@5, and an IP address/prefix for associating with non-3GPP may be IP@4. The network may send information about an MPQUIC proxy to the UE, including an IP address, a port number, and a type of the MPQUIC proxy.

In an existing MA PDU session, IP addresses corresponding to different paths and an IP address of the MA PDU session are allocated for different accesses of a single UE, enabling establishment of an MPTCP/MPQUIC connection to an MPTCP/MPQUIC proxy UPF. When the UE requests to establish a session, a network allocates three IP addresses to the UE. One IP address is the IP address of the MA PDU session, and the other two addresses are respectively subflow IP addresses of a 3GPP connection and a non-3GPP connection. The two connections in the conventional technology belong to the same UE. However, when a dual steer device establishes a dual steer session based on MPTCP/MPQUIC, sessions of two UEs each have an independent IP. During traffic switching, for example, switching from a session of a UE 1 to a session of a UE 2, it is equivalent to session re-establishment. As a result, the session is temporarily interrupted, affecting user experience.

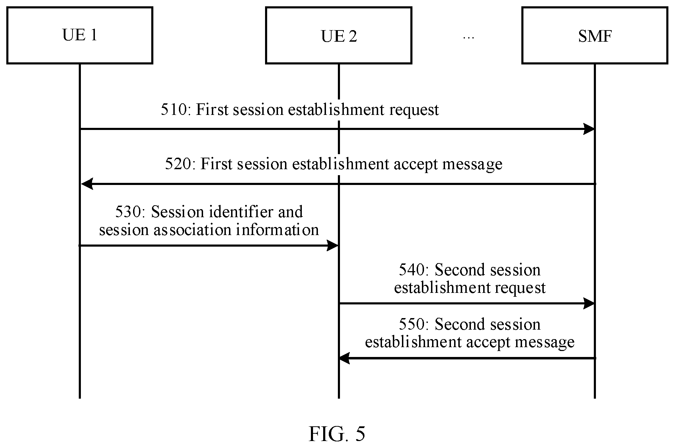

FIG. 5 is an example flowchart of a communication method according to an embodiment of this application.

The communication method is applied to a multi steer device, where the multi steer device includes a plurality of pieces of subscription data, and the plurality of pieces of subscription data may include first subscription data, second subscription data, third subscription data, and the like. There is an association relationship between the plurality of pieces of subscription data included in the multi steer device. When the multi steer device performs communication by using the first subscription data, the multi steer device may be referred to as a UE 1. When the multi steer device performs communication by using the second subscription data, the multi steer device may be referred to as a UE 2. The rest can be deduced by analogy.

510: The UE 1 sends a first session establishment request to an SMF.

The first session establishment request includes first indication information and a session identifier of a multi steer session, and the first indication information indicates to establish the multi steer session. Optionally, the session identifier of the dual steer session may alternatively be included in the first indication information.

In some possible implementations, the session identifier of the multi steer session may be an ID allocated by the UE 1 to the multi steer session, and the SMF may associate the allocated ID with an ID of the UE 1. Optionally, to avoid a conflict between IDs of sessions established by the UE 1 and the UE 2, the session identifier of the multi steer session may further include the ID of the UE 1. The ID of the UE 1 may be a 5G-globally unique temporary identifier (5G-globally unique temporary identifier, 5G-GUTI), a 5G-temporary mobile subscription identifier (5G-temporary mobile subscription identifier, 5G-S-TMSI), or a SUPI. A specific format of the session identifier of the dual steer session should not be understood as a limitation on this application.

520: The UE 1 receives a first session establishment accept message sent by the SMF.

The first session establishment accept message includes session association information and a first IP address. The session association information is used to associate session transmission paths of the plurality of pieces of subscription data, the first IP address includes an IP address allocated by the SMF to a first session, and the first session is a sub-session that is of the multi steer session and established by using the first subscription data.

The first session is the sub-session that is of the multi steer session and established by the multi steer device by using the first subscription data. The multi steer device may further establish another sub-session of the multi steer session by using other subscription data. These sub-sessions jointly form the multi steer session.

The session association information includes a session common IP address and/or a connection ID. The session common IP address is a common IP address used for establishing a multipath transmission connection by using the plurality of pieces of subscription data, and the connection ID identifies the multipath transmission connection.

For example, the multipath transmission connection may be a connection established by using MPTCP functionality or MPQUIC functionality. When the multipath transmission connection is an MPTCP connection, the session association information may be the session common IP address. When the multipath transmission connection is an MPQUIC connection, the session association information may be the session common IP address and/or the connection ID.

After the session of the multi steer device is established, the multi steer device may perform data transmission with an application server by using the session association information and the allocated IP address, where the first IP address may be used in the first session for data transmission.

530: The UE 1 sends the session identifier and the session association information to the UE 2.

The UE 1 may send the session association information and the session identifier of the multi steer session to the UE 2. In some possible implementations, because there is the association relationship between the plurality of pieces of subscription data of the multi steer device, the UE 2 may alternatively directly obtain the session association information and the session identifier of the multi steer session of the UE 1.

540: The UE 2 sends a second session establishment request to the SMF.

The second session establishment request includes second indication information and the session identifier of the multi steer session in step 510, and the second indication information indicates to establish the multi steer session.

Optionally, the session identifier of the dual steer session may alternatively be included in the second indication information. The second indication information may be the same as the first indication information.

550: The UE 2 receives a second session establishment accept message sent by the SMF.

The second session establishment accept message includes a second IP address, the second IP address includes an IP address allocated by the SMF to a second session, and the second session is a sub-session that is of the multi steer session and established by using the second subscription data.

When the multi steer device is a dual steer device, the first session and the second session jointly form the multi steer session.

It should be understood that session association between the UE 1 and the UE 2 in the foregoing embodiment is merely an example. If there is a session established by the multi steer device by using other subscription data, for example, a session established by a UE 3, a UE 4, or the like, the session may also be associated with the sessions of the UE 1 and the UE 2 according to a method similar to that performed by the UE 2. Details are not described again in this application. A quantity of associated sessions should not be understood as a limitation on this application.

In the technical solutions provided in this application, sub-sessions established by the multi steer device by using different subscription data may be associated by using the session association information, and different IP addresses are allocated to all the sub-sessions, to jointly complete session transmission.

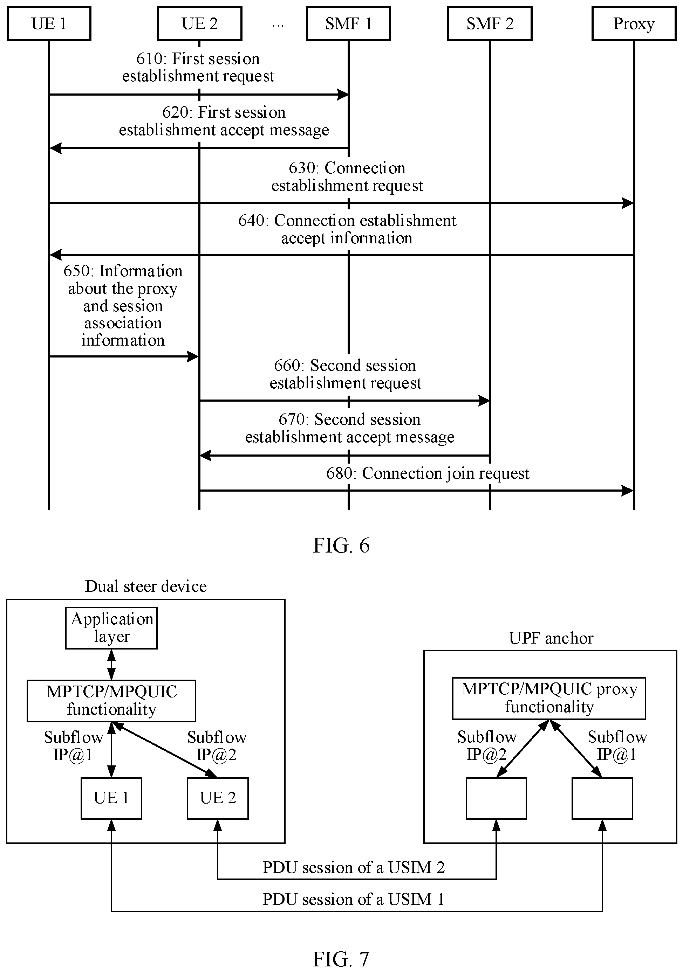

FIG. 6 is an example flowchart of another communication method according to an embodiment of this application.

The communication method is applied to a multi steer device, where the multi steer device includes a plurality of pieces of subscription data, and the plurality of pieces of subscription data may include first subscription data, second subscription data, third subscription data, and the like. There is an association relationship between the plurality of pieces of subscription data included in the multi steer device. When the multi steer device performs communication by using the first subscription data, the multi steer device may be referred to as a UE 1. When the multi steer device performs communication by using the second subscription data, the multi steer device may be referred to as a UE 2. The rest can be deduced by analogy.

610: The UE 1 sends a first session establishment request to an SMF 1.

The first session establishment request includes first indication information, the first indication information indicates to allocate a proxy to the multi steer device, and the proxy is used to establish a multipath connection with the multi steer device.

620: The UE 1 receives a first session establishment accept message sent by the SMF 1.

After receiving the first session establishment request, the SMF 1 selects, for the UE 1, a proxy that can be used as a session anchor and a UPF that can be connected to the anchor.

The first session establishment accept message includes information about the proxy. The first session establishment accept message indicates that a first session is established, and the first session is a session established by the multi steer device by using the first subscription data.

It should be understood that the information about the proxy may be an IP address of the proxy, and may further include an ID of the proxy, a type of the proxy, and the like.

The first session is a PDU session established by the multi steer device by using the first subscription data. The multi steer device may further establish another PDU session by using other subscription data. These PDU sessions are aggregated by using the proxy, and share one multipath transmission connection.

630: The UE 1 sends a connection establishment request to the proxy.

The UE 1 may send an MPTCP/MPQUIC connection establishment request to the proxy based on the IP address of the proxy. In a possible implementation, the UE 1 may send an MP_CAPABLE message to the proxy, to trigger establishment of an MPTCP connection.

640: The UE 1 receives a connection establishment accept message sent by the proxy.

The connection establishment accept message includes session association information, and the session association information is used to associate session transmission paths of the plurality of pieces of subscription data.

The session association information includes a session common IP address and/or a connection ID. The session common IP address is a common IP address used for establishing the multipath transmission connection by using the plurality of pieces of subscription data, and the connection ID identifies the multipath transmission connection.

For example, the multipath transmission connection may be a connection established by using MPTCP functionality or MPQUIC functionality. When the multipath transmission connection is the MPTCP connection, the session association information may be the session common IP address. When the multipath transmission connection is an MPQUIC connection, the session association information may be the session common IP address and/or the connection ID.

650: The UE 1 sends the session association information and the information about the proxy to the UE 2.

The UE 1 may send the session association information and the information about the proxy to the UE 2. In some possible implementations, because there is the association relationship between the plurality of pieces of subscription data of the multi steer device, the UE 2 may alternatively directly obtain the session association information and the information about the proxy of the UE 1.

660: The UE 2 sends a second session establishment request to an SMF 2.

The second session establishment request includes second indication information and the information about the proxy, the second indication information indicates to allocate the proxy to the multi steer device, and the proxy is used to establish the multipath connection with the multi steer device.

Optionally, the information about the proxy may be included in the second indication information, and the second indication information may be the same as the first indication information.

670: The UE 2 receives a second session establishment accept message sent by the SMF 2.

The SMF 2 may select, for the UE 2 based on the information about the proxy, a UPF that can be connected to the proxy.

The second session establishment accept message indicates that a second session is established, and the second session is a session established by the multi steer device by using the second subscription data.

680: The UE 2 sends a connection join request to the proxy.

The UE 2 sends the connection join request to the proxy based on the information about the proxy, where the connection join request includes the session association information, and the connection join request is used to request to join a connection corresponding to the session association information.

It should be understood that the SMF 1 and the SMF 2 in this embodiment of this application may be the same or may be different. This is not limited in this application.

In the technical solutions provided in this application, a conventional session establishment procedure is performed for a session establishment request sent by a UE, but a proxy is selected for the UE, to aggregate sessions of a plurality of UEs, and establish the multipath transmission connection based on the sessions.

For example, if the multi steer device is a dual steer device, the first session and the second session share one multipath transmission connection, and the multipath transmission connection may be a connection established by using the MPTCP functionality and the MPQUIC functionality.

It should be understood that session association between the UE 1 and the UE 2 in the foregoing embodiment is merely an example. If there is a session established by the multi steer device by using other subscription data, for example, a session established by a UE 3, a UE 4, or the like, the session may also be associated with the sessions of the UE 1 and the UE 2 according to a method similar to that performed by the UE 2. Details are not described again in this application. A quantity of associated sessions should not be understood as a limitation on this application.

In the following embodiments, the communication method provided in this application is described in detail by using an example in which the multi steer device is the dual steer device.

FIG. 7 is a diagram of an application scenario in which two UEs select a same UPF to establish sessions according to an embodiment of this application.

For example, a UE 1 and a UE 2 may be universal subscriber identity modules (universal subscriber identity modules, USIMs). If the UE 1 and the UE 2 select a same UPF, the UPF may serve as an MPTCP/MPQUIC proxy, that is, serve as a session anchor, to aggregate a PDU session of a USIM 1 and a PDU session of a USIM 2. During session establishment, the UE 1 may obtain session association information and a first IP address, where the session association information may be a common IP address or a connection ID of an entire session, and the first IP address is an IP address of a sub-session established by the UE 1. During session establishment, the UE 2 adds a path. In this case, only one IP address is obtained as an IP address of a sub-session established by the UE 2. The UE 2 may reuse the session association information of the UE 1, for example, reuse the common IP address of the entire session.

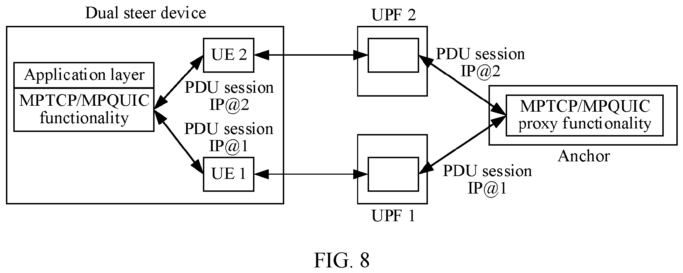

FIG. 8 is a diagram of an application scenario in which two UEs select different UPFs to establish sessions according to an embodiment of this application.

If a UE 1 and a UE 2 select different UPFs, for example, the UE 1 selects a UPF 1, and the UE 2 selects a UPF 2, an SMF may additionally select an MPTCP/MPQUIC proxy that can be used as a session anchor, and the two UEs select the same proxy.

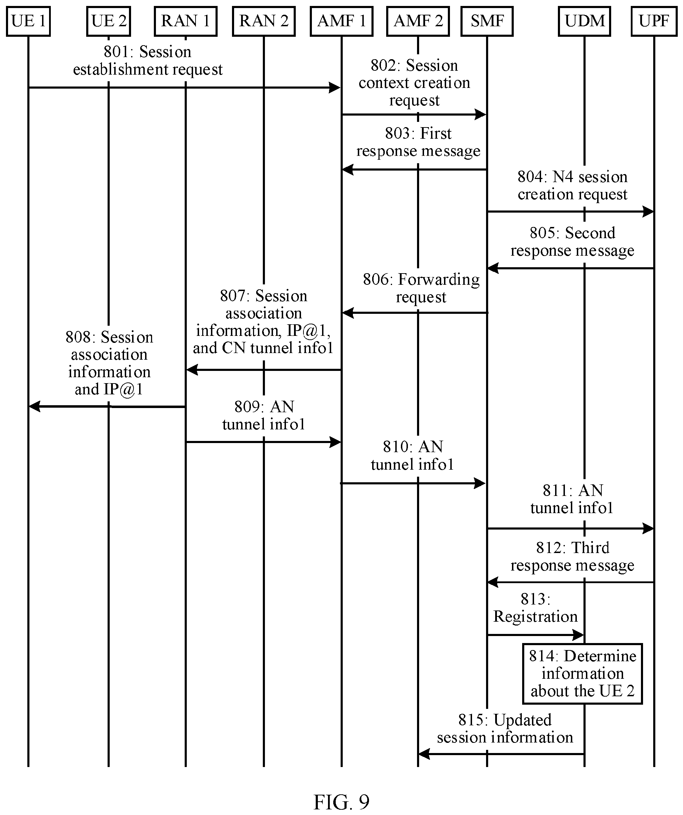

FIG. 9 is an example flowchart of a related operation of a UE 1 in a communication method according to an embodiment of this application. In this application scenario, the UE 1 and a UE 2 may select a same UPF to establish sessions.

801: The UE 1 sends a session establishment request to an AMF 1.

The session establishment request includes first indication information and a dual steer session (DualSteer Session) ID. The first indication information indicates to a network that a dual steer (DualSteer) session needs to be established. The dual steer session ID allocated by the UE 1 to the session may be included in the first indication information.

The dual steer session ID may uniquely identify the session in the UE 1 and the UE 2. For example, the multi steer session ID may be an ID allocated by the UE 1 to the multi steer session, and an SMF may associate the allocated ID with an ID of the UE 1. Optionally, the dual steer session ID may alternatively be formed by the ID of the UE 1 and the ID allocated by the UE 1. It may be ensured that the ID allocated by the UE 1 is unique in the UE 1 and the UE 2, and the ID of the UE 1 is unique in the network. Therefore, it may be ensured that the ID is unique. A specific format of the dual steer session ID is not limited in this application. The ID of the UE 1 may be a 5G-globally unique temporary identifier (5G-globally unique temporary identifier, 5G-GUTI), a 5G-temporary mobile subscription identifier (5G-temporary mobile subscription identifier, 5G-S-TMSI), or a SUPI. The specific format of the dual steer session ID should not be understood as a limitation on this application.

802: The AMF 1 sends a session context creation request to the SMF.

The session context creation request may include the first indication information and the dual steer session ID. The dual steer session ID may alternatively be included in the first indication information.

803: The SMF receives the session context creation request sent by the AMF 1. The SMF sends a first response message to the AMF 1, where the first response message is used to determine to create a session context.

When determining that a type of a session established by the UE 1 is the dual steer session, the SMF checks whether session association information and/or a first IP address of the dual steer session exist/exists in the context. If the session association information and/or the first IP address do/does not exist, it indicates that the session is a new dual steer session, and the SMF allocates the session association information and the first IP address to the UE 1. The session association information includes a session common IP address and/or a connection ID, the session common IP address is a common IP address used for establishing a multipath transmission connection, and the connection ID identifies the multipath transmission connection. The first IP address is an IP address allocated by the SMF to a first session, the first session is a sub-session that is of the multi steer session and established by the UE 1, and the first IP address may be represented by IP@1.

For example, the multipath transmission connection may be a connection established by using MPTCP functionality or MPQUIC functionality. When the multipath transmission connection is an MPTCP connection, the session association information may be the session common IP address. When the multipath transmission connection is an MPQUIC connection, the session association information may be the session common IP address and/or the connection ID.

804: The SMF sends an N4 session creation request to the UPF, to request to create an N4 session.

The session creation request may include IP@1 and the dual steer session ID; the session creation request may include IP@1 and the session association information; or the session creation request may include IP@1, the dual steer session ID, and the session association information.

805: The UPF sends a second response message to the SMF, where the second response message indicates that the N4 session is created.

The second response message includes a CN resource, and the resource is represented by CN tunnel info1 and is used by a RAN 1 to send uplink data to the UPF.

806: The SMF sends a forwarding request to the AMF 1, where the forwarding request indicates the AMF 1 to forward N1 and N2 messages.

The forwarding request message may include the session association information, IP@1, and CN tunnel info1.

807: The AMF 1 sends the N2 message to the RAN 1, where the N2 message may include the session association information, IP@1, and CN tunnel info1.

808: The RAN 1 allocates an AN resource to the UE 1, where the resource is represented by AN tunnel info1; and forwards an N1 session establishment accept message to the UE 1, where the message includes the session association information and IP@1.

809: The RAN 1 sends an N2 session establishment response message to the AMF 1, where the session establishment response message includes AN tunnel info1.

810: The AMF 1 sends the N2 session establishment response message to the SMF, where the session establishment response message includes AN tunnel info1.

811: The SMF updates session information to the UPF, and sends AN tunnel info1 to the UPF.

812: The UPF sends a third response message to the SMF, where the third response message indicates that session information update is completed.

813: The SMF registers the session context with a UDM.

After the SMF receives the third response message sent by the UPF, it indicates that the dual steer session is established. The SMF registers the session context with the UDM, where the session context includes the type of the session being the dual steer session, the corresponding dual steer session ID, and the ID of the UE 1.

814: After the SMF registers the session context with the UDM, the UDM may determine that the type of the session is the dual steer session. The UDM may determine information about the associated UE 2 based on the ID of the UE 1.

Association information of the UE 1 and the UE 2, and UE context information of the UE 1 and the UE 2 are configured in the UDM. When the type that is of the session and registered by the SMF is the dual steer session, the UDM determines the corresponding information about the UE 2 based on an association relationship stored in subscription data of the UE 1, and determines a corresponding AMF 2 based on the context information of the UE 2.

815: The UDM sends, to the AMF 2, updated session information, where the updated session information includes the dual steer session ID and an ID of the corresponding SMF.

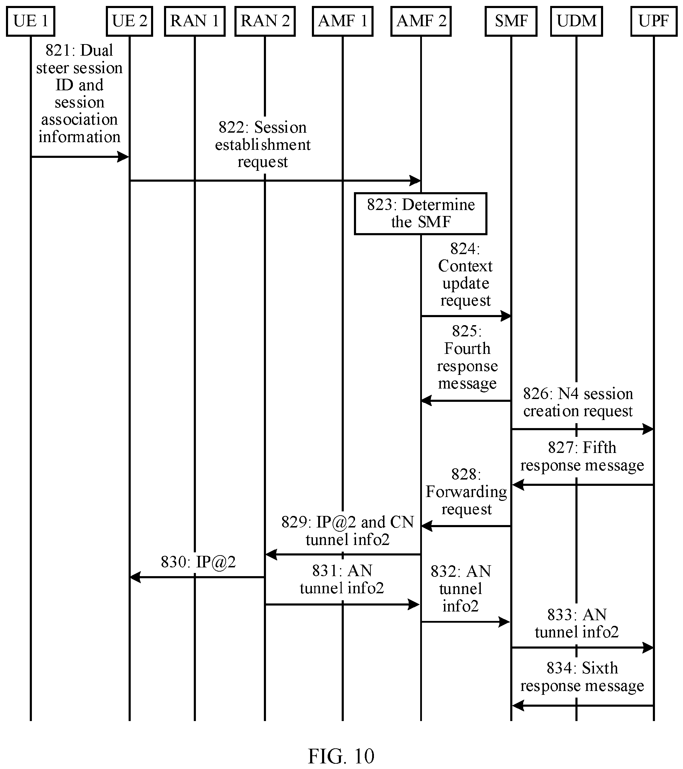

FIG. 10 is an example flowchart of a related operation of a UE 2 in a communication method according to an embodiment of this application. FIG. 10 corresponds to FIG. 9. In this application scenario, a UE 1 and the UE 2 select a same UPF to establish sessions.

821: The UE 1 sends, to the UE 2, the dual steer session ID in step 801 and the session association information received in step 808.

The UE 1 may send the session association information and the dual steer session ID to the UE 2. In some possible implementations, because there is an association relationship between two pieces of subscription data of a dual steer device, the UE 2 may alternatively directly obtain the session association information and the dual steer session ID of the UE 1.

822: The UE 2 sends a session establishment request to an AMF 2.

The session establishment request includes second indication information and the dual steer session ID obtained in step 821, and the second indication information indicates to a network that a dual steer session needs to be established.

Optionally, the dual steer session ID may alternatively be included in the second indication information, and the second indication information may be the same as first indication information.

823: The AMF 2 has obtained, based on the message pushed by the UDM in step 815, context information corresponding to the ID of the dual steer session established by the UE 1, and may determine the SMF corresponding to the dual steer session. Therefore, the same SMF may be selected to establish the dual steer session.

824: The AMF 2 sends a session context update request to the SMF.

The session context update request may include the second indication information and the dual steer session ID. The dual steer session ID may alternatively be included in the second indication information.

825: The SMF receives the session context update request sent by the AMF 2. When determining that a type of a session established by the UE 2 is a dual steer session, the SMF checks whether the session association information and/or the first IP address exist/exists in the dual steer session ID. If the session association information and/or the first IP address exist/exists in the dual steer session ID, it indicates that a session sub-path needs to be added for an existing dual steer session, and the SMF allocates a second IP address to the UE 2. The second IP address is an IP address allocated by the SMF to a second session, the second session is a sub-session that is of the multi steer session and established by the UE 2, and the second IP address may be represented by IP@2.

The SMF sends a fourth response message to the AMF 2, where the fourth response message is used to determine to update a session context.

826: The SMF sends an N4 session creation request to the UPF, to request to create an N4 session.

The session creation request may include IP@2 and the dual steer session ID; the session creation request may include IP@2 and the session association information; or the session creation request may include IP@2, the session association information, and the dual steer session ID.

827: The UPF sends a fifth response message to the SMF, where the second response message indicates that the N4 session is created.

The fifth response message includes a CN resource, and the resource is represented by CN tunnel info2 and is used by a RAN 2 to send uplink data to the UPF.

828: The SMF sends a forwarding request to the AMF 2, where the forwarding request indicates the AMF 2 to forward N1 and N2 messages.

The forwarding request message includes IP@2 and CN tunnel info2.

829: The AMF 2 sends the N2 message to the RAN 2, where the N2 message includes IP@2 and CN tunnel info2.

830: The RAN 2 allocates an AN resource to the UE 2, where the resource is represented by AN tunnel info2; and forwards an N1 session establishment accept message to the UE 2, where the message includes IP@2.

831: The RAN 2 sends an N2 session establishment response message to the AMF 2, where the session establishment response message includes AN tunnel info2.

832: The AMF 2 sends the N2 session establishment response message to the SMF, where the session establishment response message includes AN tunnel info2.

833: The SMF updates session information to the UPF, and sends AN tunnel info2 to the UPF.

834: The UPF sends a sixth response message to the SMF, where the sixth response message indicates that session information update is completed.

In this case, the session of the dual steer device is established, and the dual steer device may perform data transmission with an application server by using the session association information. The UE 1, as one session sub-path, may perform data transmission by using IP@1, and the UE 2, as the other session sub-path, may perform data transmission by using IP@2.

In this embodiment of this application, when the UE 1 and the UE 2 select the same SMF and UPF, logic of allocating an IP by the SMF is optimized. First, the SMF learns, via indication information, that a new type of session needs to be established, and then identifies the new session by using the dual steer session ID. The SMF searches for a corresponding UE context by using the information, and determines a quantity of IPs to be allocated, to establish, for a same MPTCP/MPQUIC connection, two session sub-paths used for the UE 1 and the UE 2, and complete information transmission of the same session.

It should be understood that in FIG. 9 and FIG. 10, the RAN 1 and the RAN 2 may be the same or different, and the AMF 1 and the AMF 2 may be the same or different. This is not limited in this application.

It should be understood that session association between the UE 1 and the UE 2 in the foregoing embodiment is merely an example. If there is another device, for example, a UE 3, a UE 4, or the like, the another device may also be associated with the sessions of the UE 1 and the UE 2 according to the method shown in FIG. 10. Details are not described again in this application. A quantity of devices associated with the sessions should not be understood as a limitation on this application.

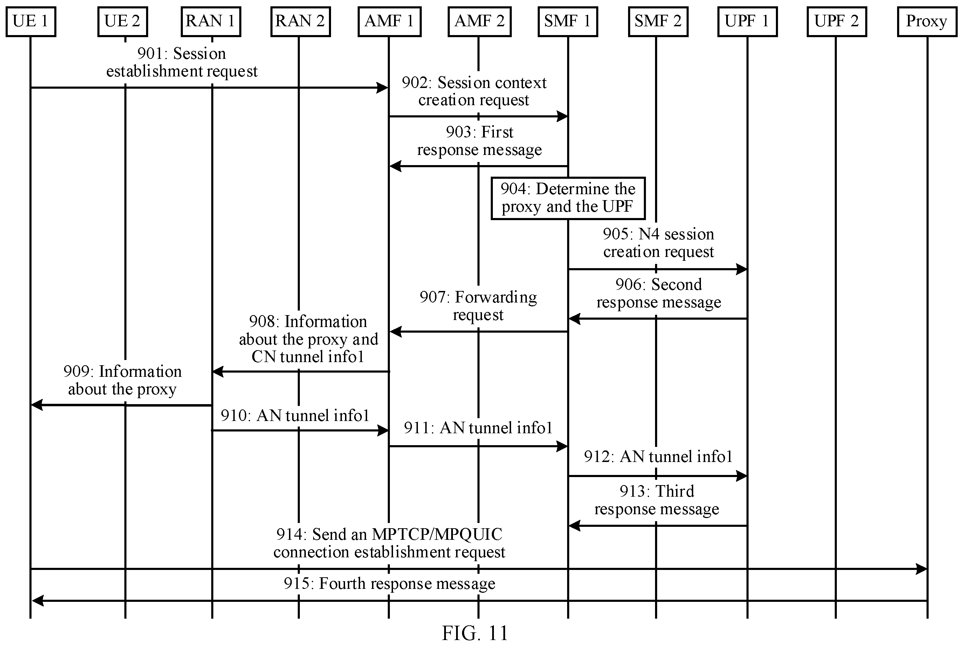

FIG. 11 is an example flowchart of a related operation of a UE 1 in another communication method according to an embodiment of this application. In this application scenario, the UE 1 and a UE 2 may select different SMFs and different UPFs to establish sessions.

901: The UE 1 sends a session establishment request to an AMF 1.

The session establishment request includes first indication information indicating to a network that a proxy needs to be allocated.

902: The AMF 1 sends a session context creation request to an SMF 1.

The session context creation request may include the first indication information in step 901 indicating to the network that the proxy needs to be allocated.

903: The SMF 1 sends a first response message to the AMF 1, where the first response message is used to determine to create a session context.

904: After receiving the session context creation request, if the request does not carry information about the proxy, the SMF 1 selects, for the UE 1, a proxy that can be used as a session anchor and a UPF 1 that can be connected to the anchor.

In some other possible implementations, during selection of the proxy that can be used as the session anchor, a network element other than the SMF 1 may perform the selection. The network element may manage the sessions as a whole, to ensure that the two UEs select the same proxy. For example, the network element is a dual steer SMF (DualSteer SMF, DS-SMF), and the SMF 1 sends a proxy request message to the DS-SMF, to request the DS-SMF to allocate the proxy to the UE 1. In a possible implementation scenario, a proxy selection list is configured in the DS-SMF, and a correspondence between a slice/data network name (data network name, DNN) and a proxy is stored in the list. The DS-SMF 1 selects the proxy for the UE 1 based on the proxy selection list, and then sends the information about the proxy to the SMF 1. After receiving the information about the proxy, the SMF 1 selects, for the UE 1 based on the information about the proxy, the UPF 1 that can be connected to the proxy.

905: The SMF 1 sends an N4 session creation request to the UPF 1, to request to create an N4 session.

906: The UPF 1 sends a second response message to the SMF 1, where the second response message indicates that the N4 session is created.

The second response message includes a CN resource, and the resource is represented by CN tunnel info1 and is used by a RAN 1 to send uplink data to the UPF 1.

907: The SMF 1 sends a forwarding request to the AMF 1, where the forwarding request indicates the AMF 1 to forward N1 and N2 messages.

If the proxy is selected in step 904, the forwarding request message may include the information about the proxy and CN tunnel info1.

It should be understood that the information about the proxy may be an IP address of the proxy, and may further include an ID of the proxy, a type of the proxy, and the like.

908: The AMF 1 sends the N2 message to the RAN 1, where the N2 message includes the information about the proxy and CN tunnel info1.

909: The RAN 1 allocates an AN resource to the UE 1, where the resource is represented by AN tunnel info1; and forwards an N1 session establishment accept message to the UE 1, where the message includes the information about the proxy.

910: The RAN 1 sends an N2 session establishment response message to the AMF 1, where the session establishment response message includes AN tunnel info1.

911: The AMF 1 sends the N2 session establishment response message to the SMF 1, where the session establishment response message includes AN tunnel info1.

912: The SMF 1 updates session information to the UPF 1, and sends AN tunnel info1 to the UPF 1.

913: The UPF 1 sends a third response message to the SMF 1, where the third response message indicates that session information update is completed.

914: In this case, the session is established, and the UE 1 sends an MPTCP/MPQUIC connection establishment request to the proxy based on the information about the proxy. In a possible implementation, the UE 1 may send an MP_CAPABLE message to the proxy, to trigger establishment of an MPTCP connection.

915: After the connection is established, the proxy may return a fourth response message to the UE 1, where the fourth response message includes session association information.

The session association information includes a session common IP address and/or a connection ID, the session common IP address is a common IP address used for establishing a multipath transmission connection, and the connection ID identifies the multipath transmission connection.

For example, the multipath transmission connection may be a connection established by using MPTCP functionality or MPQUIC functionality. When the multipath transmission connection is the MPTCP connection, the session association information may be the session common IP address. When the multipath transmission connection is an MPQUIC connection, the session association information may be the session common IP address and/or the connection ID.

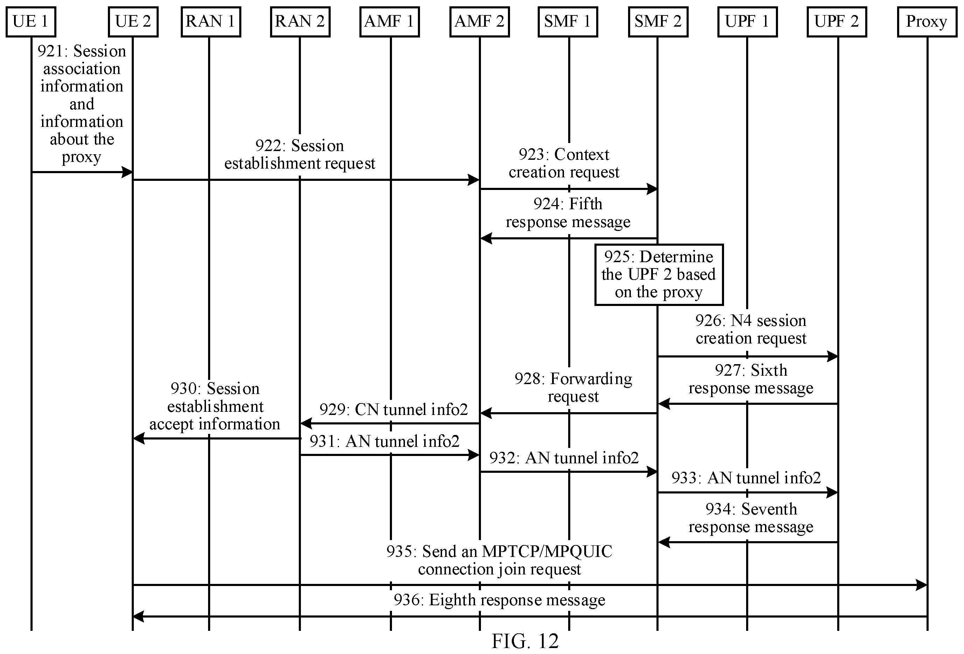

FIG. 12 is an example flowchart of a related operation of a UE 2 in another communication method according to an embodiment of this application. FIG. 12 corresponds to FIG. 11. In this application scenario, a UE 1 and the UE 2 may select different SMFs and UPFs to establish sessions.

921: The UE 1 sends information about a proxy and session association information to the UE 2.

The UE 1 may send the information about the proxy and the session association information to the UE 2. In some possible implementations, because there is an association relationship between two pieces of subscription data of a dual steer device, the UE 2 may alternatively directly obtain the information about the proxy and the session association information of the UE 1.

922: The UE 2 sends a session establishment request to an AMF 2.

The session establishment request includes second indication information and the information that is about the proxy and received in step 921, and the second indication information indicates to a network that the proxy needs to be allocated. The information about the proxy may alternatively be included in the second indication information.

923: The AMF 2 sends a session context creation request to an SMF 2.

The session context creation request may include the second indication information and the information about the proxy. The information about the proxy may alternatively be included in the second indication information.

924: The SMF 2 receives the session context creation request sent by the AMF 2. The SMF 2 sends a fifth response message to the AMF 2, where the fifth response message is used to determine to create a session context.

925: After receiving the session context creation request, the SMF 2 selects, based on the information about the proxy, a UPF 2 that can be connected to the proxy.

In some other possible implementations, during selection of a proxy that can be used as a session anchor, a network element other than the SMF 2 may perform the selection. The network element may manage the sessions as a whole, to ensure that the two UEs select the same proxy. In this scenario, the UE 2 may not send the information about the proxy to the SMF 2, and the UE 2 does not need to obtain the information about the proxy from the UE 1, but the SMF 2 should return the information about the selected proxy to the UE 2. For example, the network element is a dual steer SMF (DualSteer SMF, DS-SMF), and the SMF 2 sends a proxy request message to the DS-SMF, to request the DS-SMF to allocate the proxy to the UE 2. In a possible implementation scenario, a proxy selection list is configured in the DS-SMF, and a correspondence between a slice/data network name (data network name, DNN) and a proxy is stored in the list. Because the UE 1 and the UE 2 use a same slice/DNN, the UE 1 and the UE 2 also select the same proxy. The DS-SMF sends the information about the proxy to the SMF 2, and the SMF 2 receives the information that is about the proxy and sent by the DS-SMF, and selects, for the UE 2 based on the obtained information about the proxy, the UPF 2 that can be connected to the proxy.

926: The SMF 2 sends an N4 session creation request to the UPF 2, to request to create an N4 session.

927: The UPF 2 sends a sixth response message to the SMF 2, where the sixth response message indicates that the N4 session is created.

The sixth response message includes a CN resource, and the resource is represented by CN tunnel info2 and is used by a RAN 2 to send uplink data to the UPF 2.

928: The SMF 2 sends a forwarding request to the AMF 2, where the forwarding request indicates the AMF 2 to forward N1 and N2 messages.

The forwarding request message may include CN tunnel info2.

929: The AMF 2 sends the N2 message to the RAN 2, where the N2 message includes CN tunnel info2.

930: The RAN 2 allocates an AN resource to the UE 2, where the resource is represented by AN tunnel info2; and forwards an N1 session establishment accept message to the UE 2, where the N1 session establishment accept message indicates that a session of the UE 2 is established.

931: The RAN 2 sends an N2 session establishment response message to the AMF 2, where the session establishment response message includes AN tunnel info2.

932: The AMF 2 sends the N2 session establishment response message to the SMF 2, where the session establishment response message includes AN tunnel info2.

933: The SMF 2 updates session information to the UPF 2, and sends AN tunnel info2 to the UPF 2.

934: The UPF 2 sends a seventh response message to the SMF 2, where the seventh response message indicates that session information update is completed.

935: In this case, the session is established, and the UE 2 sends an MPTCP/MPQUIC connection join request to the proxy based on the information about the proxy, where the connection join request includes the session association information. In a possible implementation, the UE 2 may send an MP_JOIN message to the proxy, to trigger addition of a connection sub-path. The session association information carried in the request message identifies a corresponding connection.

For example, when the UE 2 establishes the connection to the proxy, a connection ID is involved, so that the proxy can know a specific connection that the UE 2 needs to be associated with. Subsequently, data may be sent by using a same common IP address.

936: After the connection is established, the proxy may return an eighth response message to the UE 2, where the eighth response message indicates that the connection is established.

It should be understood that, in this embodiment of this application, step 904 of establishing the session by the UE 1 and step 925 of establishing the session by the UE 2 are distinguished from each other depending on whether the UE actively reports the information about the proxy. In some possible implementations, the same proxy selection list may be configured for two SMFs, and the correspondence between the slice/data network name (data network name, DNN) and the proxy is stored in the list. Because the UE 1 and the UE 2 use the same slice/DNN, the SMFs should also select the same proxy. When this solution is used, during session establishment, the UE 2 may repeat a procedure of establishing the session by the UE 1, to be specific, the UE 1 does not need to send the information about the proxy to the UE 2 in step 921, and the UE 2 does not need to report the information about the proxy in steps 922 and 923.

In this embodiment of this application, when the UE 1 and the UE 2 select the different SMFs and UPFs, the SMF does not perceive an entire session, but processes, as separate PDU sessions, the sessions that the UEs request to establish, and selects a proxy used as the anchor for the UEs to aggregate the sessions of the two UEs. Each sub-path is a PDU session of the UE, and an MPTCP/MPQUIC connection is established based on the sessions.

It should be understood that in FIG. 11 and FIG. 12, the RAN 1 and the RAN 2 may be the same or different, the AMF 1 and the AMF 2 may be the same or different, the SMF 1 and the SMF 2 may be the same or different, and the UPF 1 and the UPF 2 may be the same or different. This is not limited in this application.

It should be understood that session association between the UE 1 and the UE 2 in the foregoing embodiment is merely an example. If there is another device, for example, a UE 3, a UE 4, or the like, the another device may also be associated with the sessions of the UE 1 and the UE 2 according to the method shown in FIG. 12. Details are not described again in this application. A quantity of devices associated with the sessions should not be understood as a limitation on this application.

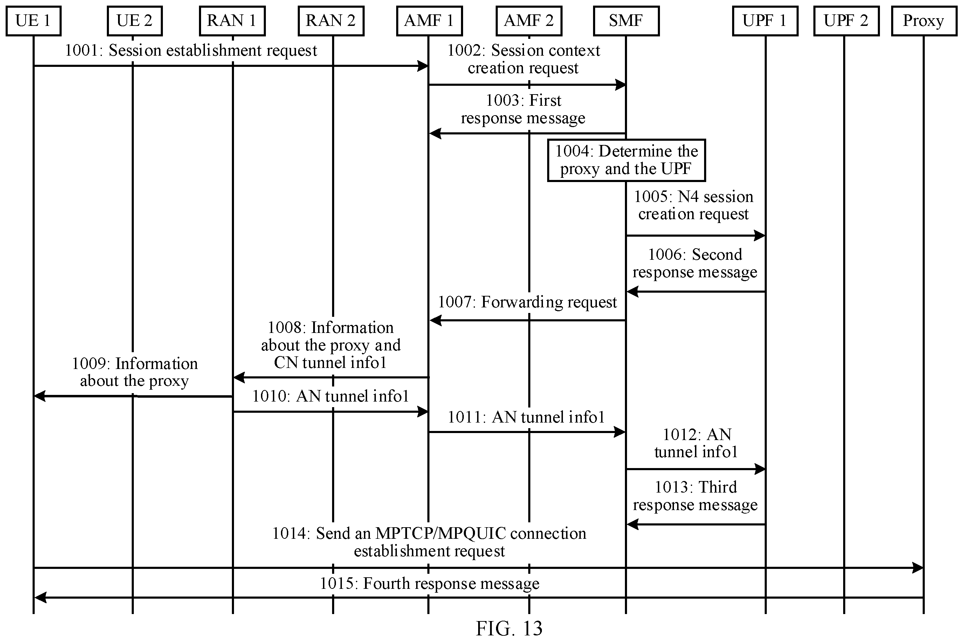

FIG. 13 is an example flowchart of a related operation of a UE 1 in another communication method according to an embodiment of this application. In this application scenario, the UE 1 and a UE 2 may select a same SMF and different UPFs to establish sessions. The UE 1 and the UE 2 select the same SMF, so that the sessions of the UEs can be better managed.

1001: The UE 1 sends a session establishment request to an AMF 1.

The session establishment request includes first indication information and a session ID. The first indication information indicates to a network that a proxy needs to be allocated, and the session ID identifies a first session established by the UE 1.

The session ID may uniquely identify the first session in the UE 1 and the UE 2. For example, the session ID may be an ID allocated by the UE 1 to the session, and the SMF may associate the allocated ID with an ID of the UE 1. Optionally, the session ID may alternatively be formed by the ID of the UE 1 and the ID allocated by the UE 1. It may be ensured that the ID allocated by the UE 1 is unique in the UE 1 and the UE 2, and the ID of the UE 1 is unique in the network. Therefore, it may be ensured that the ID is unique. A specific format of the session ID is not limited in this application. The ID of the UE 1 may be a 5G-globally unique temporary identifier (5G-globally unique temporary identifier, 5G-GUTI), a 5G-temporary mobile subscription identifier (5G-temporary mobile subscription identifier, 5G-S-TMSI), or a SUPI. The specific format of the session ID should not be understood as a limitation on this application.

1002: The AMF 1 sends a session context creation request to the SMF.

The session context creation request may include the first indication information and the session ID. The session ID may alternatively be included in the first indication information.

1003: The SMF sends a first response message to the AMF 1, where the first response message is used to determine to create a session context.

1004: After receiving the session context creation request, the SMF checks whether a context corresponding to the session ID exists or whether information about the proxy exists in the context. If the context or the information does not exist, it indicates that the session is a new session, and the SMF selects, for the UE 1, a proxy that can be used as a session anchor and a UPF 1 that can be connected to the anchor.

In some other possible implementations, during selection of the proxy that can be used as the session anchor, a network element other than the SMF may perform the selection. The network element may manage the sessions as a whole, to ensure that the two UEs select the same proxy. For example, the network element is a DS-SMF, and the SMF sends a proxy request message to the DS-SMF, to request the DS-SMF to allocate the proxy to the UE 1. In a possible implementation scenario, a proxy selection list is configured in the DS-SMF, and a correspondence between a slice/DNN and a proxy is stored in the list. The DS-SMF selects the proxy for the UE 1 based on the proxy selection list, and then sends the information about the proxy to the SMF. After receiving the information about the proxy, the SMF selects, for the UE 1 based on the information about the proxy, the UPF 1 that can be connected to the proxy.

1005: The SMF sends an N4 session creation request to the UPF 1, to request to create an N4 session.

1006: The UPF 1 sends a second response message to the SMF, where the second response message indicates that the N4 session is created.

The second response message includes a CN resource, and the resource is represented by CN tunnel info1 and is used by a RAN 1 to send uplink data to the UPF 1.

1007: The SMF sends a forwarding request to the AMF 1, where the forwarding request indicates the AMF 1 to forward N1 and N2 messages.

If the proxy is selected in step 1004, the forwarding request message may include the information about the proxy and CN tunnel info1.

It should be understood that the information about the proxy may be an IP address of the proxy, and may further include an ID of the proxy, a type of the proxy, and the like.

1008: The AMF 1 sends the N2 message to the RAN 1, where the N2 message includes the information about the proxy and CN tunnel info1.

1009: The RAN 1 allocates an AN resource to the UE 1, where the resource is represented by AN tunnel info1; and forwards an N1 session establishment accept message to the UE 1, where the message includes the information about the proxy.

1010: The RAN 1 sends an N2 session establishment response message to the AMF 1, where the session establishment response message includes AN tunnel info1.

1011: The AMF 1 sends the N2 session establishment response message to the SMF, where the session establishment response message includes AN tunnel info1.

1012: The SMF updates session information to the UPF 1, and sends AN tunnel info1 to the UPF 1.

1013: The UPF 1 sends a third response message to the SMF, where the third response message indicates that session information update is completed.

1014: In this case, the session is established, and the UE 1 sends an MPTCP/MPQUIC connection establishment request to the proxy based on the information about the proxy. In a possible implementation, the UE 1 may send an MP_CAPABLE message to the proxy, to trigger establishment of an MPTCP connection.

1015: After the connection is established, the proxy may return a fourth response message to the UE 1, where the fourth response message may include session association information.

The session association information includes a session common IP address and/or a connection ID, the session common IP address is a common IP address used for establishing a multipath transmission connection, and the connection ID identifies the multipath transmission connection.

For example, the multipath transmission connection may be a connection established by using MPTCP functionality or MPQUIC functionality. When the multipath transmission connection is the MPTCP connection, the session association information may be the session common IP address. When the multipath transmission connection is an MPQUIC connection, the session association information may be the session common IP address and/or the connection ID.

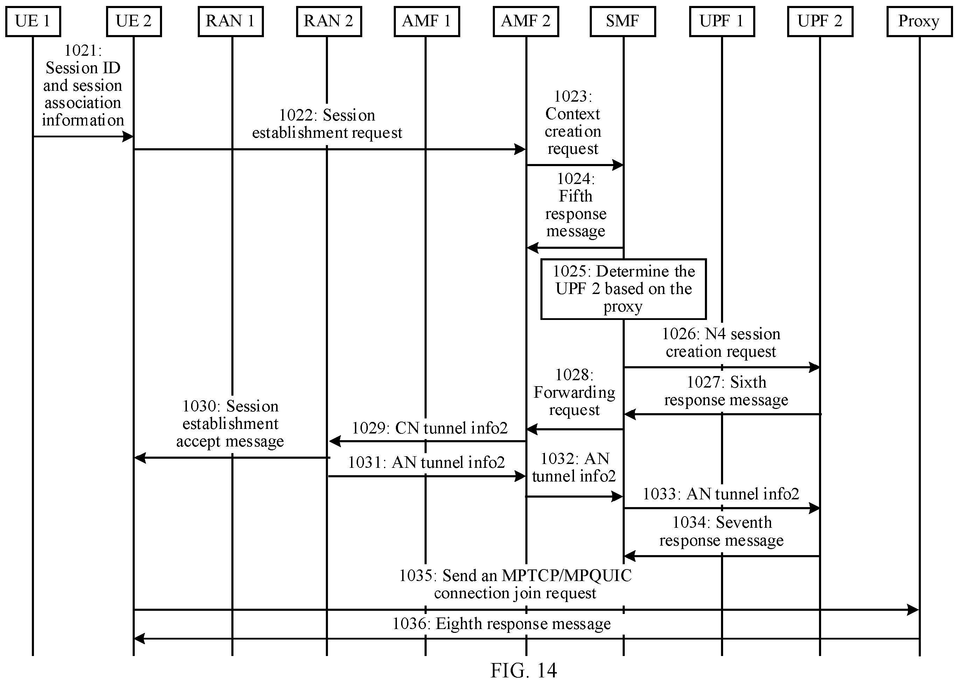

FIG. 14 is an example flowchart of a related operation of a UE 2 in another communication method according to an embodiment of this application. FIG. 14 corresponds to FIG. 13. In this application scenario, a UE 1 and the UE 2 may select a same SMF and different UPFs to establish sessions. The UE 1 and the UE 2 select the same SMF, so that the sessions of the UEs can be better managed.

1021: The UE 1 sends the session ID in step 1001 and the session association information in step 1015 to the UE 2.

The UE 1 may send the session ID and the session association information to the UE 2. In some possible implementations, because there is an association relationship between two pieces of subscription data of a dual steer device, the UE 2 may alternatively directly obtain the session ID and the session association information of the UE 1.

1022: The UE 2 sends a session establishment request to an AMF 2.

The session establishment request includes second indication information and the session ID. The second indication information indicates to a network that a proxy needs to be allocated.

Optionally, the session ID may be included in the second indication information.

1023: The AMF 2 sends a session context creation request to the SMF.

The session context creation request may include the second indication information and the session ID. The session ID may alternatively be included in the second indication information.

1024: The SMF receives the session context creation request sent by the AMF 2. The SMF sends a fifth response message to the AMF 2, where the fifth response message is used to determine to create a session context.

1025: After receiving the session context creation request, the SMF may check whether a context corresponding to the session ID exists or whether information about the proxy exists in the context. If the context or the information exists, the SMF obtains the information about the proxy from the context, and selects, for the UE 2 based on the information about the proxy, a UPF 2 that can be connected to the proxy.

In some other possible implementations, the UE 1 may also send the information about the proxy to the UE 2, and the UE 2 sends the information about the proxy to the SMF. The SMF directly selects, based on the information about the proxy, the UPF 2 that can be connected to the proxy, without checking the context corresponding to the session ID.

In some other possible implementations, during selection of a proxy that can be used as a session anchor, a network element other than the SMF may perform the selection. The network element may manage the sessions as a whole, to ensure that the two UEs select the same proxy. For example, the network element is a DS-SMF, and the SMF sends a proxy request message to the DS-SMF, to request the DS-SMF to allocate the proxy to the UE 2. In a possible implementation scenario, a proxy selection list is configured in the DS-SMF, and a correspondence between a slice/DNN and a proxy is stored in the list. Because the UE 1 and the UE 2 use a same slice/DNN, the UE 1 and the UE 2 also select the same proxy. The DS-SMF sends the information about the proxy to the SMF, and the SMF receives the information that is about the proxy and sent by the DS-SMF, and selects, for the UE 2 based on the obtained information about the proxy, the UPF 2 that can be connected to the proxy.

1026: The SMF sends an N4 session creation request to the UPF 2, to request to create an N4 session.

1027: The UPF 2 sends a sixth response message to the SMF, where the sixth response message indicates that the N4 session is created.

The sixth response message includes a CN resource, and the resource is represented by CN tunnel info2 and is used by a RAN 2 to send uplink data to the UPF 2.

1028: The SMF sends a forwarding request to the AMF 2, where the forwarding request indicates the AMF 2 to forward N1 and N2 messages.

The forwarding request message may include CN tunnel info2.

If the UE 1 does not send the information about the proxy to the UE 2 in step 1021, the forwarding request message may include the information about the proxy.

1029: The AMF 2 sends the N2 message to the RAN 2, where the N2 message includes CN tunnel info2.

If the UE 1 does not send the information about the proxy to the UE 2 in step 1021, the N2 message may include the information about the proxy.

1030: The RAN 2 allocates an AN resource to the UE 2, where the resource is represented by AN tunnel info2; and forwards an N1 session establishment accept message to the UE 2, where the N1 session establishment accept message indicates that a session of the UE 2 is established.

1031: The RAN 2 sends an N2 session establishment response message to the AMF 2, where the session establishment response message includes AN tunnel info2.

1032: The AMF 2 sends the N2 session establishment response message to the SMF, where the session establishment response message includes AN tunnel info2.

1033: The SMF updates session information to the UPF 2, and sends AN tunnel info2 to the UPF 2.

1034: The UPF 2 sends a seventh response message to the SMF, where the seventh response message indicates that session information update is completed.

1035: In this case, the session is established, and the UE 2 sends an MPTCP/MPQUIC connection join request to the proxy based on the information about the proxy, where the connection join request includes the session association information. In a possible implementation, the UE 2 may send an MP_JOIN message to the proxy, to trigger addition of a connection sub-path. The session association information carried in the request message identifies a corresponding connection.

For example, when the UE 2 establishes the connection to the proxy, a connection ID may be involved, so that the proxy can know a specific connection that the UE 2 needs to be associated with. Subsequently, data may be sent by using a same common IP address.

1036: After the connection is established, the proxy may return an eighth response message to the UE 2, where the eighth response message indicates that the connection is established.

In this embodiment of this application, when the UE 1 and the UE 2 select the same SMF and the different UPFs, the SMF is used as a control node of the two UEs, but the UPFs do not need to be the same when being selected. The SMF does not perceive an association relationship between the two sessions of the UE 1 and the UE 2, and still performs session establishment in a manner of separately establishing the sessions, but additionally selects the proxy as an anchor for the UEs, to aggregate the sessions of the two UEs. Each connection sub-path is a PDU session of the UE, and an MPTCP/MPQUIC connection is established based on the sessions.

It should be understood that in FIG. 13 and FIG. 14, the RAN 1 and the RAN 2 may be the same or different, the AMF 1 and the AMF 2 may be the same or different, and the UPF 1 and the UPF 2 may be the same or different. This is not limited in this application.

It should be understood that session association between the UE 1 and the UE 2 in the foregoing embodiment is merely an example. If there is another device, for example, a UE 3, a UE 4, or the like, the another device may also be associated with the sessions of the UE 1 and the UE 2 according to the method shown in FIG. 14. Details are not described again in this application. A quantity of devices associated with the sessions should not be understood as a limitation on this application.

It should be understood that the foregoing network architectures applied to embodiments of this application are merely examples for description, and a network architecture applicable to embodiments of this application is not limited thereto. Any network architecture that can implement functions of the foregoing network elements is applicable to embodiments of this application.

It should be further understood that the AMF, the SMF, the UPF, and the like shown in FIG. 5 to FIG. 14 may be understood as network elements configured to implement different functions, for example, may be combined into a network slice as needed. The network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

During actual deployment, network elements with different functions may be co-located. For example, the access and mobility management network element may be co-located with the session management network element. The session management network element may be co-located with the user plane network element. When two network elements are co-located, interaction between the two network elements provided in embodiments of this application becomes an internal operation of the co-located network element or may be omitted.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

It should be further understood that the names of the interfaces between the network elements in the figure are merely examples, and the interfaces may have other names during specific implementation. This is not specifically limited in this application. In addition, names of messages (or signaling) transmitted between the foregoing network elements are merely examples, and do not constitute any limitation on functions of the messages.

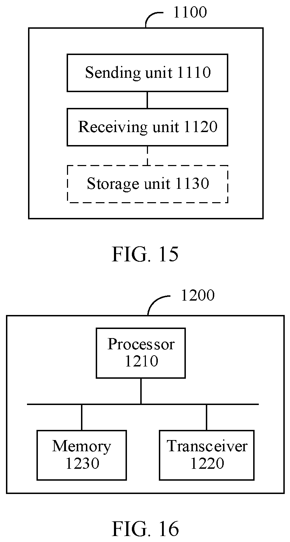

The foregoing describes in detail the communication methods provided in embodiments of this application with reference to FIG. 5 to FIG. 14. The following describes in detail communication apparatuses provided in embodiments of this application with reference to FIG. 15 and FIG. 16. It should be understood that descriptions of apparatus embodiments correspond to the descriptions of the method embodiments. Therefore, for content that is not described in detail, refer to the method embodiments above. For brevity, details are not described herein again.

FIG. 15 is a block diagram of a communication apparatus according to an embodiment of this application. As shown in FIG. 15, the communication apparatus 1100 may include a sending unit 1110 and a receiving unit 1120.

It should be understood that the communication apparatus 1100 may correspond to the multi steer device, the dual steer device, the UE 1, or the UE 2 in embodiments of this application. For example, the communication apparatus 1100 can implement actions, steps, or methods related to the multi steer device, the dual steer device, the UE 1, or the UE 2 in FIG. 5 to FIG. 14 in the foregoing method embodiments.

This application provides a communication apparatus, including: a sending unit, configured to send a first session establishment request, where the first session establishment request includes first indication information and a session identifier of a multi steer session, and the first indication information indicates to establish the multi steer session; and a receiving unit, configured to receive a first session establishment accept message, where the first session establishment accept message includes session association information and a first IP address, the session association information is used to associate session transmission paths of a plurality of pieces of subscription data included in a multi steer device, the first IP address includes an IP address allocated by an SMF to a first session, the first session is a sub-session that is of the multi steer session and established by using first subscription data, and the first subscription data is one of the plurality of pieces of subscription data.

Optionally, in some implementations, the session association information includes a session common IP address and/or a connection ID, the session common IP address is a common IP address used for establishing a multipath transmission connection by using the plurality of pieces of subscription data, and the connection ID identifies the multipath transmission connection.

This application further provides a communication apparatus, including: a sending unit, configured to send a second session establishment request, where the second session establishment request includes second indication information and a session identifier of a multi steer session, and the second indication information indicates to establish the multi steer session; and a receiving unit, configured to receive a second session establishment accept message, where the second session establishment accept message includes a second IP address, the second IP address includes an IP address allocated by an SMF to a second session, and the second session is a sub-session that is of the multi steer session and established by using second subscription data.

Optionally, in some implementations, the session association information includes a session common IP address and/or a connection ID, the session common IP address is a common IP address used for establishing a multipath transmission connection by using the plurality of pieces of subscription data, and the connection ID identifies the multipath transmission connection.

This application further provides a communication apparatus, including: a receiving unit, configured to receive a first session establishment request sent by a multi steer device by using first subscription data, where the first session establishment request includes first indication information and a session identifier of a multi steer session, the first indication information indicates to establish the multi steer session, the multi steer device includes a plurality of pieces of subscription data, and the plurality of pieces of subscription data include the first subscription data; and a sending unit, configured to send a first session establishment accept message, where the first session establishment accept message includes session association information and a first IP address, the session association information is used to associate session transmission paths of the plurality of pieces of subscription data, the first IP address includes an IP address allocated by an SMF to a first session, and the first session is a sub-session that is of the multi steer session and established by using the first subscription data.

Optionally, in some implementations, the session association information includes a session common IP address and/or a connection ID, the session common IP address is a common IP address used for establishing a multipath transmission connection by using the plurality of pieces of subscription data, and the connection ID identifies the multipath transmission connection.

Optionally, in some implementations, the sending unit is further configured to send a third session establishment request to a UPF, where the third session establishment request is used to establish a session with the UPF; the third session establishment request includes the session association information and the first IP address, or the third session establishment request includes the session identifier and the first IP address; and the UPF is configured to aggregate sub-sessions of the multi steer session.

Optionally, in some implementations, the receiving unit is further configured to receive a second session establishment request sent by the multi steer device by using second subscription data, where the second session establishment request includes second indication information and the session identifier, the second indication information indicates to establish the multi steer session, and the plurality of pieces of subscription data include the second subscription data. The sending unit is further configured to send a second session establishment accept message, where the second session establishment accept message includes a second IP address, the second IP address includes an IP address allocated by the SMF to a second session, and the second session is a sub-session that is of the multi steer session and established by using the second subscription data.

Optionally, in some implementations, the sending unit is further configured to send a fourth session establishment request to the UPF, where the fourth session establishment request is used to establish a session with the UPF; and the fourth session establishment request includes the session association information and the second IP address, or the fourth session establishment request includes the session identifier and the second IP address.

Optionally, in some implementations, the sending unit is further configured to send a session registration message, where the session registration message is used to register context information of the multi steer session with a unified data management UDM network element, and the context information includes a type of the multi steer session and the session identifier.

This application further provides a communication apparatus, including: a sending unit, configured to send a first session establishment request, where the first session establishment request includes first indication information, the first indication information indicates to allocate a proxy to a multi steer device, and the proxy is used to establish a multipath connection with the multi steer device; and a receiving unit, configured to receive a first session establishment accept message, where the first session establishment accept message includes information about the proxy, the first session establishment accept message indicates that a first session is established, and the first session is a session established by the multi steer device by using first subscription data. The sending unit is further configured to send a connection establishment request to the proxy based on the information about the proxy. The receiving unit is further configured to receive a connection establishment accept message sent by the proxy, where the connection establishment accept message includes session association information, and the session association information is used to associate session transmission paths of a plurality of pieces of subscription data.

Optionally, in some implementations, the session association information includes a session common IP address and/or a connection ID, the session common IP address is a common IP address used for establishing the multipath transmission connection by using the plurality of pieces of subscription data, and the connection ID identifies the multipath transmission connection.

Optionally, in some implementations, the first session establishment request further includes a session identifier of the first session.

This application further provides a communication apparatus, including: a sending unit, configured to send a second session establishment request, where the second session establishment request includes second indication information and information about a proxy, the second indication information indicates to allocate the proxy to a multi steer device, and the proxy is used to establish a multipath connection with the multi steer device; and a receiving unit, configured to receive a second session establishment accept message, where the second session establishment accept message indicates that a second session is established, and the second session is a session established by the multi steer device by using second subscription data. The sending unit is further configured to send a connection join request to the proxy based on the information about the proxy, where the connection join request includes session association information, the connection join request is used to request to join a connection corresponding to the session association information, and the session association information is used to associate session transmission paths of a plurality of pieces of subscription data.

Optionally, in some implementations, the session association information includes a session common IP address and/or a connection ID, the session common IP address is a common IP address used for establishing the multipath transmission connection by using the plurality of pieces of subscription data, and the connection ID identifies the multipath transmission connection.

Optionally, in some implementations, the receiving unit is further configured to receive response information from the proxy, where the response information indicates that joining the connection corresponding to the session association information succeeds.

Optionally, in some implementations, the second session establishment request further includes a session identifier of a first session, the first session is a session established by the multi steer device by using first subscription data, and the first subscription data is one of the plurality of pieces of subscription data other than the second subscription data.

This application further provides a communication apparatus, including: a receiving unit, configured to receive a first session establishment request sent by a multi steer device by using first subscription data, where the first session establishment request includes first indication information, the first indication information indicates to allocate a proxy to the multi steer device, the proxy is used to establish a multipath connection with the multi steer device, the multi steer device includes a plurality of pieces of subscription data, and the plurality of pieces of subscription data include the first subscription data; and a sending unit, configured to send a first session establishment accept message, where the first session establishment accept message includes information about the proxy, the first session establishment accept message indicates that a first session is established, and the first session is a session established by the multi steer device by using the first subscription data.

Optionally, in some implementations, the first session establishment request further includes a session identifier of the first session.

Optionally, in some implementations, the receiving unit is further configured to receive a second session establishment request sent by the multi steer device by using second subscription data, where the second session establishment request includes second indication information and the information about the proxy, the second indication information indicates to allocate the proxy to the multi steer device, and the second subscription data is one of the plurality of pieces of subscription data other than the first subscription data. The sending unit is further configured to send a second session establishment accept message, where the second session establishment accept message indicates that a second session is established, and the second session is a session established by the multi steer device by using the second subscription data.

Optionally, in some implementations, the sending unit is further configured to send a proxy request message, where the proxy request message is used to request a first network element to allocate the proxy to the multi steer device, and the first network element is configured to manage a session of the multi steer device. The receiving unit is further configured to receive a proxy allocation message, where the proxy allocation message includes the information about the proxy.

It should be understood that when the communication apparatus 1100 is a chip, the chip includes the sending unit 1110 and the receiving unit 1120. The sending unit 1110 and the receiving unit 1120 may be input/output circuits or communication interfaces. The sending unit 1110 and the receiving unit 1120 are configured to implement signal receiving and sending operations of the communication apparatus 1100.

Optionally, the communication apparatus 1100 may further include a storage unit 1130, and the storage unit 1130 is configured to store instructions.

FIG. 16 is a block diagram of a communication device according to an embodiment of this application. As shown in the figure, the communication device 1200 includes at least one processor 1210, and may further include a transceiver 1220. Optionally, the communication device 1200 further includes a memory 1230, configured to store instructions. The processor 1210 is coupled to the memory 1230, and is configured to execute the instructions stored in the memory 1230, to control the transceiver 1220 to send a signal and/or receive a signal.

It should be understood that the processor 1210 and the memory 1230 may be integrated into one processing apparatus. The processor 1210 is configured to execute program code stored in the memory 1230, to implement the foregoing functions. During specific implementation, the memory 1230 may alternatively be integrated into the processor 1210, or may be independent of the processor 1210.

It should be further understood that the transceiver 1220 may include a receiver (which is also referred to as a receiver machine) and a transmitter (which is also referred to as a transmitter machine). The transceiver 1220 may further include an antenna, and there may be one or more antennas. The transceiver 1220 may alternatively be a communication interface or an interface circuit.

When the communication device 1200 is a chip, the chip may include a transceiver unit and a processing unit. The transceiver unit may be an input/output circuit or a communication interface. The processing unit may be a processor, a microprocessor, or an integrated circuit integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

An embodiment of this application further provides a computer-readable storage medium. The computer-readable storage medium stores a computer program or instructions used to implement the method performed by the multi steer device, the dual steer device, the UE 1, or the UE 2 in the foregoing method embodiments.

For example, when the computer program is executed by a computer, the computer is caused to implement the method performed by the multi steer device, the dual steer device, the UE 1, or the UE 2 in the foregoing method embodiments.

An embodiment of this application further provides a computer-readable storage medium. The computer-readable storage medium stores a computer program or instructions used to implement the method performed by the SMF in the foregoing method embodiments.

For example, when the computer program is executed by a computer, the computer is caused to implement the method performed by the SMF in the foregoing method embodiments.

An embodiment of this application further provides a computer program product including instructions. When the instructions are executed by a computer, the computer is caused to implement the method performed by the multi steer device, the dual steer device, the UE 1, or the UE 2 in the foregoing method embodiments.

An embodiment of this application further provides a computer program product including instructions. When the instructions are executed by a computer, the computer is caused to implement the method performed by the SMF in the foregoing method embodiments.

An embodiment of this application further provides a communication system. The communication system includes a multi steer device and a session association network element. The multi steer device is configured to perform the steps of the method performed by the multi steer device, the dual steer device, the UE 1, or the UE 2 in the foregoing method embodiments. The SMF is configured to perform the steps of the method performed by the SMF in the foregoing method embodiments.

It may be clearly understood by a person skilled in the art that, for the purpose of convenient and brief description, for explanations and beneficial effects of related content in any communication apparatus provided above, refer to corresponding method embodiments provided above. Details are not described herein again.

A specific structure of an execution body of a method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a multi steer device or a session association network element, or may be performed by a functional module that is in the multi steer device or the session association network element and can invoke and execute a program.

Various aspects or features of this application may be implemented as methods, apparatuses, or products using standard programming and/or engineering techniques. As used herein, the term "product" may encompass a computer program accessible from any computer-readable device, carrier, or medium.

The computer-readable storage medium may be any usable medium accessible by the computer, or a data storage device, for example, a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

The various storage media described herein may represent one or more devices and/or other machine-readable media for storing information. The term "machine-readable media" may include, but is not limited to: a radio channel and various other media capable of storing, containing, and/or carrying instructions and/or data.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

In the several embodiments provided in this application, it should be understood that the disclosed apparatus and method may be implemented in other manners. For example, the foregoing apparatus embodiments are merely examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings, direct couplings, or communication connections may be implemented through some interfaces, and indirect couplings or communication connections between apparatuses or units may be implemented in an electrical, mechanical, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When the software is used for implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that, in embodiments of this application, numbers "first", "second", and the like are merely for distinguishing between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a multi steer device, wherein the multi steer device comprises a plurality of pieces of subscription data, the multi steer device performs the method by using first subscription data, the first subscription data is one of the plurality of pieces of subscription data, and the method comprises:
sending a first session establishment request, wherein the first session establishment request comprises first indication information and a session identifier of a multi steer session, and the first indication information indicates to establish the multi steer session; and
receiving a first session establishment accept message, wherein the first session establishment accept message comprises session association information and a first internet protocol IP address, the session association information is used to associate session transmission paths of the plurality of pieces of subscription data, the first IP address comprises an IP address allocated by a session management network element SMF to a first session, and the first session is a sub-session that is of the multi steer session and established by using the first subscription data.

2. The method according to claim 1, wherein the session association information comprises a session common IP address and/or a connection identifier ID, the session common IP address is a common IP address used for establishing a multipath transmission connection by using the plurality of pieces of subscription data, and the connection ID identifies the multipath transmission connection.

3. A communication method, applied to a multi steer device, wherein the multi steer device comprises a plurality of pieces of subscription data, the multi steer device performs the method by using second subscription data, the second subscription data is one of the plurality of pieces of subscription data, and the method comprises:
sending a second session establishment request, wherein the second session establishment request comprises second indication information and a session identifier of a multi steer session, and the second indication information indicates to establish the multi steer session; and
receiving a second session establishment accept message, wherein the second session establishment accept message comprises a second IP address, the second IP address comprises an IP address allocated by a session management network element SMF to a second session, and the second session is a sub-session that is of the multi steer session and established by using the second subscription data.

4. The method according to claim 3, wherein the session association information comprises a session common IP address and/or a connection identifier ID, the session common IP address is a common IP address used for establishing a multipath transmission connection by using the plurality of pieces of subscription data, and the connection ID identifies the multipath transmission connection.

5. A communication method, applied to a session management network element SMF, wherein the method comprises:
receiving a first session establishment request sent by a multi steer device by using first subscription data, wherein the first session establishment request comprises first indication information and a session identifier of a multi steer session, the first indication information indicates to establish the multi steer session, the multi steer device comprises a plurality of pieces of subscription data, and the plurality of pieces of subscription data comprise the first subscription data; and
sending a first session establishment accept message, wherein the first session establishment accept message comprises session association information and a first IP address, the session association information is used to associate session transmission paths of the plurality of pieces of subscription data, the first IP address comprises an IP address allocated by the SMF to a first session, and the first session is a sub-session that is of the multi steer session and established by using the first subscription data.

6. The method according to claim 5, wherein the session association information comprises a session common IP address and/or a connection identifier ID, the session common IP address is a common IP address used for establishing a multipath transmission connection by using the plurality of pieces of subscription data, and the connection ID identifies the multipath transmission connection.

7. The method according to claim 5 or 6, wherein before sending the first session establishment accept message, the method further comprises:
sending a third session establishment request to a user plane network element UPF, wherein the third session establishment request is used to establish a session with the UPF; the third session establishment request comprises the session association information and the first IP address, or the third session establishment request comprises the session identifier and the first IP address; and the UPF is configured to aggregate sub-sessions of the multi steer session.

8. The method according to claim 7, wherein the method further comprises:
receiving a second session establishment request sent by the multi steer device by using second subscription data, wherein the second session establishment request comprises second indication information and the session identifier, the second indication information indicates to establish the multi steer session, and the plurality of pieces of subscription data comprise the second subscription data; and
sending a second session establishment accept message, wherein the second session establishment accept message comprises a second IP address, the second IP address comprises an IP address allocated by the SMF to a second session, and the second session is a sub-session that is of the multi steer session and established by using the second subscription data.

9. The method according to claim 8, wherein before sending the second session establishment accept message, the method further comprises:
sending a fourth session establishment request to the UPF, wherein the fourth session establishment request is used to establish a session with the UPF; and the fourth session establishment request comprises the session association information and the second IP address, or the fourth session establishment request comprises the session identifier and the second IP address.

10. The method according to any one of claims 5 to 9, wherein the method further comprises:
sending a session registration message, wherein the session registration message is used to register context information of the multi steer session with a unified data management UDM network element, and the context information comprises a type of the multi steer session and the session identifier.

11. A communication method, applied to a multi steer device, wherein the multi steer device comprises a plurality of pieces of subscription data, the multi steer device performs the method by using first subscription data, the first subscription data is one of the plurality of pieces of subscription data, and the method comprises:
sending a first session establishment request, wherein the first session establishment request comprises first indication information, the first indication information indicates to allocate a proxy to the multi steer device, and the proxy is used to establish a multipath connection with the multi steer device;
receiving a first session establishment accept message, wherein the first session establishment accept message comprises information about the proxy, the first session establishment accept message indicates that a first session is established, and the first session is a session established by the multi steer device by using the first subscription data;
sending a connection establishment request to the proxy based on the information about the proxy; and
receiving a connection establishment accept message sent by the proxy, wherein the connection establishment accept message comprises session association information, and the session association information is used to associate session transmission paths of the plurality of pieces of subscription data.

12. The method according to claim 11, wherein the session association information comprises a session common IP address and/or a connection identifier ID, the session common IP address is a common IP address used for establishing the multipath transmission connection by using the plurality of pieces of subscription data, and the connection ID identifies the multipath transmission connection.

13. The method according to claim 11 or 12, wherein the first session establishment request further comprises a session identifier of the first session.

14. A communication method, applied to a multi steer device, wherein the multi steer device comprises a plurality of pieces of subscription data, the multi steer device performs the method by using second subscription data, the second subscription data is one of the plurality of pieces of subscription data, and the method comprises:
sending a second session establishment request, wherein the second session establishment request comprises second indication information and information about a proxy, the second indication information indicates to allocate the proxy to the multi steer device, and the proxy is used to establish a multipath connection with the multi steer device;
receiving a second session establishment accept message, wherein the second session establishment accept message indicates that a second session is established, and the second session is a session established by the multi steer device by using the second subscription data; and
sending a connection join request to the proxy based on the information about the proxy, wherein the connection join request comprises session association information, the connection join request is used to request to join a connection corresponding to the session association information, and the session association information is used to associate session transmission paths of the plurality of pieces of subscription data.

15. The method according to claim 14, wherein the session association information comprises a session common IP address and/or a connection identifier ID, the session common IP address is a common IP address used for establishing the multipath transmission connection by using the plurality of pieces of subscription data, and the connection ID identifies the multipath transmission connection.

16. The method according to claim 14 or 15, wherein the method further comprises:
receiving response information from the proxy, wherein the response information indicates that joining the connection corresponding to the session association information succeeds.

17. The method according to any one of claims 14 to 16, wherein the second session establishment request further comprises a session identifier of a first session, the first session is a session established by the multi steer device by using first subscription data, and the first subscription data is one of the plurality of pieces of subscription data other than the second subscription data.

18. A communication method, applied to a session management network element SMF, wherein the method comprises:
receiving a first session establishment request sent by a multi steer device by using first subscription data, wherein the first session establishment request comprises first indication information, the first indication information indicates to allocate a proxy to the multi steer device, the proxy is used to establish a multipath connection with the multi steer device, the multi steer device comprises a plurality of pieces of subscription data, and the plurality of pieces of subscription data comprise the first subscription data; and
sending a first session establishment accept message, wherein the first session establishment accept message comprises information about the proxy, the first session establishment accept message indicates that a first session is established, and the first session is a session established by the multi steer device by using the first subscription data.

19. The method according to claim 18, wherein the first session establishment request further comprises a session identifier of the first session.

20. The method according to claim 18 or 19, wherein the method further comprises:
receiving a second session establishment request sent by the multi steer device by using second subscription data, wherein the second session establishment request comprises second indication information and the information about the proxy, the second indication information indicates to allocate the proxy to the multi steer device, and the second subscription data is one of the plurality of pieces of subscription data other than the first subscription data; and
sending a second session establishment accept message, wherein the second session establishment accept message indicates that a second session is established, and the second session is a session established by the multi steer device by using the second subscription data.

21. The method according to any one of claims 18 to 20, wherein the method further comprises:
sending a proxy request message, wherein the proxy request message is used to request a first network element to allocate the proxy to the multi steer device, and the first network element is configured to manage a session of the multi steer device; and
receiving a proxy allocation message, wherein the proxy allocation message comprises the information about the proxy.

22. A communication apparatus, comprising a module or a unit configured to perform the method according to claim 1 or 2, comprising a module or a unit configured to perform the method according to claim 3 or 4, comprising a module or a unit configured to perform the method according to any one of claims 5 to 10, comprising a module or a unit configured to perform the method according to any one of claims 11 to 13, comprising a module or a unit configured to perform the method according to any one of claims 14 to 17, or comprising a module or a unit configured to perform the method according to any one of claims 18 to 21.

23. A communication apparatus, wherein the apparatus comprises a processor, the processor is coupled to a memory, the memory stores instructions, and when the instructions are run by the processor, the processor is caused to perform the method according to any one of claims 1 to 21.

24. A communication system, comprising a multi steer device and a session management network element, wherein the multi steer device is configured to perform the method according to any one of claims 1 to 4, and the session management network element is configured to perform the method according to any one of claims 5 to 10.

25. A communication system, comprising a multi steer device and a session management network element, wherein the multi steer device is configured to perform the method according to any one of claims 11 to 17, and the session management network element is configured to perform the method according to any one of claims 18 to 21.

26. A computer-readable storage medium, wherein the computer-readable storage medium stores a computer program or instructions, and the computer program or the instructions are used to implement the method according to any one of claims 1 to 21.

27. A chip, comprising a processor and an interface, configured to invoke, from a memory, a computer program stored in the memory, and run the computer program, to perform the method according to any one of claims 1 to 21.
